Europäisches Patentamt

European Patent Office

Office européen des brevets

(19)

(11) Publication number: **0 071 109**

**B1**

(12) **EUROPEAN PATENT SPECIFICATION**

(45) Date of publication of patent specification: **05.11.86**

(51) Int. Cl.⁴: **B 32 B 31/00**

(21) Application number: **82106395.5**

(22) Date of filing: **16.07.82**

(54) **Method and apparatus for assembling sandwiches comprising hot bent glass sheets.**

(30) Priority: **28.07.81 US 287595**
**28.07.81 US 287600**
**28.07.81 US 287607**
**28.07.81 US 287608**

(43) Date of publication of application:
**09.02.83 Bulletin 83/06**

(45) Publication of the grant of the patent:
**05.11.86 Bulletin 86/45**

(84) Designated Contracting States:
**BE DE FR GB IT NL SE**

(56) References cited:
**GB-A- 785 464**
**US-A-2 920 989**
**US-A-2 990 305**
**US-A-3 918 948**

(73) Proprietor: **PPG INDUSTRIES, INC.**
**One PPG Place**
**Pittsburgh Pennsylvania 15272 (US)**

(72) Inventor: **Valimont, James Lawrence**
**102 Deborah Lynn Court**
**Cheswick Pennsylvania 15024 (US)**
Inventor: **Kelly, Joseph David**
**223 Cheswick Avenue**
**Cheswick Pennsylvania 15024 (US)**
Inventor: **Phares, Hershel Lee**
**Box 201 A, R.D. No. 2**
**Apollo Pennsylvania 15613 (US)**
Inventor: **Shadle, Barry LeRoy**
**R.D. No. 3 Moreland Manor**
**Leechburg Pennsylvania 15656 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

**Description**

1. Field of the invention

The present invention relates to the assembly of sheets to be fabricated into bent laminated windshields. Conventionally, bent laminated windshields for automobiles are fabricated using several separate steps. The first step involves bending a doublet, or a pair of glass sheets, into shapes that conform to the shape desired for the bent laminated windshield. The two sheets are bent as a pair so that their shape conforms to one another throughout the entire extent of the glass sheets. A tunnel-like lehr is used to heat the pair of bent glass sheets in unison to conform to the upwardly facing shaping surface of a bending mold.

Usually a parting material is applied to facilitate separating the sheets after the bending operation is completed. A particularly good technique for supplying the parting material involves spraying an aqueous suspension of fine diatomaceous earth in the manner disclosed in U.S. Patent No. 2,725,320 to Atkeson and Golightly. The benefit of this patented process is that it is unnecessary to wash the parting material from between the interfacial surfaces of the matching bent glass sheets when the bent glass sheets are separated prior to assembling the sheets with a flexible sheet of interlayer material to form a sandwich.

A second step, which conventionally has taken place in an area remote from the glass bending lehr, involves the assembly of the pair of matched bent glass sheets with a flexible sheet of plasticized interlayer material to form the sandwich to be laminated. An interlayer for laminated safety glass windshields for automobiles presently used commercially is composed of a plasticized polyvinyl acetal resin, preferably polyvinyl butyral prepared in the manner recited in U.S. Patent No. 2,400,957 to Stamatoff.

The polyvinyl butyrals contain a plasticizer. Generally, the plasticizer used is a water-insoluble ester of a polybasic acid and a polyhydric alcohol. Particularly desirable plasticizers for use with the interlayers assembled between pairs of bent glass sheets of matching curvature are triethylene glycol di(2-ethyl butyrate), dibutyl sebacate, di(beta-butoxyethyl) sebacate, dioctyl phthalate, and di-n-hexyl adipate.

Other interlayer materials include certain polyurethanes, preferably those derived by reacting an organic polyisocyanate with a material having a multiplicity of active hydrogen sites, such as a polyether polyol and/or a polyester polyol or a polyamine. U.S. Patent No. 3,808,077 to Rieser and Chabal discloses polyurethanes suitable for use as the inner layer of bilayer windshields, which comprise an outer glass sheet and an inner layer of polyurethane. These polyurethane compositions are also useful as interlayers in conventional windshields of two glass sheets and an interlayer.

After the sandwich is assembled, it is laminated. In the manufacture of laminated windshields comprising a pair of matched sheets of bent glass and a thermoplastic interlayer, it is desirable to obtain a complete adhesive bond between the glass sheets and the thermoplastic interlayer. This complete adhesive bond is obtained commercially by subjecting the assembled glass and plastic sheets to heat and pressure while immersed in a hot oil bath while within an autoclave. Unless the marginal edges of the laminated assemblies are sealed by bonding the glass to the thermoplastic interlayer before the assembly is exposed to the oil bath, the oil in the autoclave may penetrate between the two sheets of glass and the interlayer. The assembly being laminated is discolored in the portion where oil penetration takes place.

In preparing assemblies for the autoclave, two bent glass sheets and a plastic interlayer are assembled in the form of a sandwich in an area remote from the bending lehr. The bent glass sheets are usually cooled to a temperature approaching room temperature during their transfer to an assembly area. Therefore, they form a cool sandwich of sheets that are able to slide relative to one another. To avoid sliding, the sandwich must be heated to a temperature at which the interlayer becomes tacky and resists relative sliding.

The heated sandwich is subjected to a preliminary pressing by passing the sandwich between one or more pairs of nipper rolls formed of resilient, yet frictional, contacting material that engage the outer surfaces of the assembly to be laminated. As the sandwich passes through the nipper rolls, air entrapped between the layers of the assembly is forced out. This preliminary pressing, sometimes followed by edge rolling of the margin of the plastic interlayer before the latter cools to room temperature, provides a sufficient seal extending over the entire marginal area of the assembly to prevent oil penetration and the resulting discoloration when the assembly is subjected to its final pressing operation in the oil autocalve. A typical roll pressing apparatus for prepressing glass-plastic sandwiches is disclosed in U.S. Patent No. 3,351,001 to Achkio.

At times, some portion of the plastic sheet adjacent the edge of the laminate is not sealed to the glass after the prepressing operation, so that in the final pressing operation oil can enter the laminate. To alleviate this condition, any portions of the edge that are not sealed after prepressing are manually edge sealed to prevent the oil from entering the laminate during the final pressing operation. This edge sealing is accomplished immediately after prepressing by rolling and compressing the hot interlayer edge, so as to force it between the glass sheets into sealing contact therewith, with a thin metal disc known in the trade as an edge roller. A preferred edge roller is described in U.S. Patent No. 2,999,779 to Morris.

The usual autoclave treatment utilizes temperatures ranging from about (190 to 325°F) 88 to 163°C preferably about (225 to 300°F) 107 to 149°C and, simultaneously, elevated pressure in the range of (100 to 250 pounds per square inch) 0.7 to 1.7 megapascals and preferably (175 to 225 pounds per square inch) 1.2 to 1.5 megapascals for a period of ten minutes to more than one hour, preferably 20 to 45 minutes. While oil autoclaves have been used more frequently in the past, final lamination has been accomplished by immersing prepressed assemblies in air autoclaves at approximately the same temperature and pressure conditions as those that prevail in oil autoclaves.

In the past, glass sheets were bent in pairs at one part of a windshield fabrication plant and assembled, prepressed, edge rolled and subjected to autoclave conditions in other parts of the plant. When sandwiches are assembled manually, it is convenient to allow the bent glass sheets to cool to a temperature suitable for handling before performing the sandwich assembly step. Such cooling wastes the residual heat in the bent glass sheets. It would be desirable for the assembly of the sandwich to take place at a time and place such that the energy presently lost through cooling the glass sheets between the bending operation and the assembly of the sandwich is not wasted so that the sandwich can be assembled, prepressed and edge-rolled using as much of the residual heat from the bending operation as possible. If the sandwich assembly is performed automatically, there is no need to be concerned with operator discomfort thast relates to handling hot glass sheets.

2. Description of patents of interest

U.S. Patent No. 2,920,989 to Cochran et al describes an automatic assembly apparatus for assembling a pair of bent glass sheets to form a sandwich of the glass sheets with a sheet of interlayer material. The bent glass sheets are separated and move at equal velocities along an assembly line where a sheet of interlayer material is applied to the upper surface of the lower bent glass sheet and the upper glass sheet is then pivoted onto the upper surface of the interlayer to assemble a sandwich for lamination. This operation is performed in an area remote from the location where the glass is bent. Consequently, the glass retains little, if any, residual heat from bending to assist in assembling the sandwich. Therefore, the sandwich most be reheated for the prepressing and edge rolling steps.

U.S. Patent No. 2,205,003 to Walters describes an apparatus for assembling a sandwich of two flat glass sheets and a sheet of interlayer material. The glass sheets are of rectangular outline and are mounted on tables pivotable between a horizontal and a vertical orientation. After the glass sheets are mounted in the horizontal orientation, the tables are pivoted upon pivot axes located at the adjacent ends of the table, a sheet of interlayer material is inserted therebetween and the assembly is formed in a vertical orientation. The assembled sheets are then pivoted in unison beyond the vertical orientation so that the assembly can then be removed. This patent does not treat bent assemblies nor does it treat assemblies in which any of the components remain heated from a previous operating step.

U.S. Patent No. 3,499,744 to Tolliver suggests using residual heat in recently bent glass sheets to help secure a small metal bracket that supports a rear view mirror to a glass surface. The metal bracket is coated with a thermoplastic adhesive on the surface bonded.

U.S. Patent No. 3,518,137 to Hamilton discloses apparatus for assembling a safety glass panel, also of flat safety glass, and provides a wedge means that means in advance of a pair of nipper rolls to insure that air is selectively removed from the interfacial surfaces of the assembly during its fabrication. While the patent refers to the application of heat and pressure when an interlayer is self-securing at elevated temperatures, there is no suggestion in this patent of using the heat remaining from a previous operation, such as shaping the glass sheets, to help bond adjacent layers of an assembled sandwich to one another.

U.S. Patent No. 2,317,348 to Wekeman discloses a vacuum holder in which sheets are supported by vacuum around their perimeter. U.S. Patent No. 3,833,251 to Creskoff, discloses a vacuum lifter to support arcuately shaped objects. The lifter is provided with a pair of flexible sheets, one of which is reinforced with a central stiffening member that helps prevent undesired bending of a flexible sheet having a port through which a vacuum source communicates to provide the vacuum for lifting objects of arcuate shape. Another vacuum suspension device for handling large sized plates is reported in U.S. Patent No. 4,155,583 to Mikos et al. The apparatus of this patent comprises a vacuum chamber divided into two parts, a larger work chamber forming a vacuum container connected with pumps and a smaller decompression chamber situated below the working chamber. Both chambers are connected together by electromagnetic valves to provide a quicker operation. This vacuum suspension apparatus is particularly useful in handling concrete building parts that are of low strength and brittle. U.S. Patent No. 3,638,564 to Prange et al. discloses means to orient and align a flat glass sheet of non-rectangular outline on a conveyer belt. This patent provides side edge engaging discs movable in pairs to engage the opposite side edges of the glass sheet and end edge engaging discs that move in pairs against the opposite and edges of the flat glass sheets in a horizontal plane common to the discs to properly align each sheet both transversly and longitudinally of the conveyor belt at a fixed station.

## Object of the invention

It is a primary object of this invention to perform the sandwich assembly step.

It would be desirable to perform the sandwich assembly step automatically rather than manually to provide a more consistant alignment of the sheets comprising the sandwich prior to their assembly while hot than is possible from assembling the sandwich by hand. When a flexible sheet of interlayer material is assembled between a pair of bent glass sheets at an elevated temperature at which the interlayer surfaces become tacky on contact with hot glass and is unable to slide relative to the hot glass it contacts, the sandwich remains in its originally assembled configuration during subsequent treatment steps including the prepressing operation using pressing rolls. Since automatic assembly provides more repetitive alignment than manual assembly, the chance of breakage due to misalignment of the bent glass sheets of the sandwich during roll pressing required for prepressing is minimized provided automatic assembly apparatus is provided with means to align the assembly position of the flexible sheet of interlayer material with those of the two bent glass sheets.

The method aspect of this invention is recited in claims 1 to 17, the apparatus aspect of this invention is recited in claims 18 to 42, and the use of said apparatus is recited in claim 43.

For the sake of this description, the term "bent glass sheet pair" refers to a pair of bent glass sheets without an interlayer sheet, the term "subassembly" is used to identify a partial sandwich of a single glass sheet and an interlayer sheet, the term "sandwich" comprises two matched bent glass sheets and a flexible sheet of interlayer material, the term "assembly" is applied to a sandwich that has been prepressed and is ready for final lamination, and the terms "laminate" and "laminated windshield" are applied to the finally laminated assembly after the latter is subjected to an autoclave operation.

## Summary of the invention

The present invention is performed using apparatus concerned with the assembly of a sandwich with minimum fuel consumption to insure that the flexible sheet of interlayer material tacks onto both bent glass sheets. It also concerns assuring that the sheets comprising the sandwich are aligned precisely to minimize the possibility of breakage during further processing and to insure that a laminated windshield having good optical properties results. However, the principles of the present invention may also be used to assemble a subassembly which may be fabricated into a bilayer windshield comprising a single bent glass sheet laminated on one surface to a flexible sheet of plastic material.

The illustrative embodiment of the present invention involves automatically assembling a pair of bent glass sheets of matching curvature with a flexible sheet of plastic interlayer material to form a sandwich to be laminated in such a manner that the residual heat resulting from the glass sheet bending operation is not completely wasted. The bent glass sheets and the sheet of interlayer material are assembled automatically to form a sandwich for the prepressing operation and the edge rolling operation (should the latter be needed) in the vicinity of the exit of a glass sheet bending lehr where the glass sheets are bent in pairs to assemble a sandwich of a flexible sheet of interlayer material with a pair of bent glass sheets while hot.

Various specific features of the specific embodiment of an assembly method and apparatus are covered by the present claims. These include the manner in which the flexible interlayer sheets are handled prior to sandwiching one of them between a pair of bent glass sheets of matching configuration at a sandwich assembly station.

In a specific embodiment, the flexible interlayer sheet is mounted in proper alignment over a curved vacuum mold having an apertured wall shaped to conform to the shape of the bent glass sheets while the shaped wall is oriented to a convex elevation. The vacuum mold is then rotated 180 degrees with vacuum applied to hold the sheet of flexible interlayer material in a concave elevational configuration against the mold. The bent glass sheets oriented to have a concave elevation are separated to provide a gap for inserting the sheet of the interlayer material between the bent glass sheets so that the vacuum mold moves into a position where its shaped apertured wall is between the separated bent glass sheets and then is moved toward the lower bent glass sheet to deposit the sheet of interlayer matrerial in proper alignment over the lower glass sheet.

The vacuum mold is then pressurized to help transfer the interlayer sheet as quickly as possible onto the lower bent glass sheet to form a subassembly. The vacuum mold is removed from the assembly station as soon as the subassembly of the lower glass sheet and sheet of interlayer material is formed.

The upper bent glass sheet then moves into a position of alignment with the subassembly to engage the interlayer sheet to complete the sandwich while still hot enough to take the interlayer sheet tacky on contact. The vacuum mold is rotated to a convex elevational configuration to one side of the assembly station to load another flexible sheet of interlayer material for use in the next sandwich to be assembled.

The assembled sandwich leaves the assembly station for a further processing station, which, in this case, is a roll pressing station. To insure against mismatch of the flexible interlayer sheet relative to the vacuum mold and also to compensate for dimensional changes in the sheet of flexible interlayer material, the latter sheets are preferably cut to slightly larger dimensions than the bent glass sheets forming the sandwich or subassembly to be assembled.

Another feature of the specific embodiment of

the apparatus involves the use of a plurality of vacuum cups for supporting the bent glass sheets. The vacuum cups are mounted and oriented in a lower set and an upper set. The cups in each set move in unison so that the lower set engages the bottom surface of the lower bent glass sheet in flatwise engagement against localized engaged areas and the upper set engages the top surface of the upper bent glass sheet in a similar flatwise engagement. When vacuum is applied to the vacuum cups and the sets are separated, they separate the two glass sheets to provide a clearance gap for moving a sheet of flexible interlayer material into the assembly position within the gap while the flexible sheet is engaged by vacuum by a vacuum mold having an apertured sheet engaging wall shaped to conform to the bent glass sheets.

In a specific embodiment of this feature of inventive subject matter, each set of vacuum cups is mounted along a surface generally parallel to the surface defined by the engaged bent glass sheets. However, the lower set of vacuum cups includes at least one upwardly biased, central vacuum cup that engages the central portion of the lower glass sheet to provide a slight, temporary upward bias to the central portion of the lower glass sheet when the lower set initially engages the bottom surface of the lower glass sheet. Thus, when the vacuum mold is lowered to apply the flexible interlayer sheet against the top surface of the lower bent glass sheet, the interlayer initially makes contact with the slightly upwardly biased central portion of the lower bent glass sheet, the lowering mold gradually overcomes the upward bias of the central portion and gradually increases the area of contact outward from the central portion of original contact with the lower bent glass sheet toward the outermost longitudinal ends of the glass sheet to force air along the interface toward the edge of the resulting subassembly. Removing the vacuum mold reinstitutes the temporary upward bias in the central portion of the lower glass sheet, so that when the upper glass sheet is installed in superimposed position over the subassembly comprising the biased bottom glass sheet and the interlayer sheet, the bottom surface of the upper glass sheet makes initial contact with the top surface of the interlayer sheet at its central portion superimposed on the temporarily upwardly biased central portion of the lower glass sheet and the upward bias is gradually overcome as the upper glass sheet is lowered. In this manner, the area of contact gradually increases outward from the central portion between the bottom surface of upper bent glass sheet and the top surface of the interlayer sheet toward the opposite longitudinal ends of the sheets to force air along the newly formed interface toward the edges of the resulting sandwich. This aspect of inventive subject matter is believed to cover the assembly of the subassembly as well as that of the sandwich.

Another feature of the preferred embodiment involves a lightweight vacuum mold having an apertured wall shaped to conform to the top surface of the lower glass sheet, a second wall of similar shape and a plurality of relatively closely spaced blocks of uniform thickness separating the shaped walls to insure that the walls of the vacuum mold remain uniformly spaced from one another, while providing a vacuum mold of minimum mass and desired shape. The lightweight vacuum mold moves between an orientation of convex elevational configuration for applying the flexible interlayer sheet onto the mold at a mold loading station and an orientation of concave elevational configuration at an assembly position aligned with positions of alignment for at least one of the bent glass sheets at an assembly station.

Still another feature oif inventive subject matter contained in the preferred apparatus embodiment involves means to insure the alignment of the top and bottom bent glass sheets before they are separated from one another to an alignment position that the flexible sheet of interlayer material occupies at the assembly station, and to insure that they are in proper alignment while the sandwich is assembled. The alignment means comprises longitudinal end edge alignment means, side edge alignment means and two sets of vacuum cups. The end edge alignment means comprises a pair of linear rotating rolls to engage each longitudinal end edge of the glass sheet pair, means to orient each of said pairs of linear rotating rolls to be parallel to an adjacent end edge portion of the glass sheets, and means to move said pairs of linear rotating rolls in essentially horizontal paths spaced vertically from the support plane of the conveyor.

The linear rotating rolls of the end edge alignment means are freely rotatable about axles that extend obliquely in directions approximately parallel to the end edge surfaces of bent sheet pairs having a curvature about a transverse axis within a given range of curvatures. The oriented pairs of linear rotating rolls have an axial length sufficient to engage spaced end edge portions of pairs of bent glass sheets having a depth of bend within a given range of depths of bend when moved in unison along said essentially horizontal paths.

The side edge alignment means comprise a pair of side edge alignment rolls adapted to engage each side edge of said glass sheet pair by moving at least one of said pair of side edge engaging rolls and preferably both of said pairs of side edge engaging rolls transversely to define a transverse alignment position of support along the conveyor. Then, the side edge engaging rolls move vertically while maintaining side edge engagement as the pair of bent glass sheets is lifted off the position of support along the conveyor.

The linear rotating rolls of the end edge engaging means are oriented in pairs of freely rotatable end edge engaging rolls. Each roll pair is mounted to pivot for pivotable adjustment to a desired fixed orientation about a common axis for the roll pair to position said linear rotating rolls along a line parallel to the longitudinal end edge of the bent glass sheet pair adjacent thereto. Each linear rotating roll is freely rotatable about an obliquely extending axis approximately parallel to the corresponding end edge of the bent glass sheets of a family of patterns to be aligned and assembled into sandwiches. The rolls of the edge alignment means orient and align the bent glass sheet pair as a pair relative to the support provided by spaced conveyor rolls prior to the engagement of the upper and lower bent glass sheets by upper and lower sets of vacuum cups that engage the upper and lower glass sheets of the pair after the lower set lifts the bent glass sheets off the conveyor support. The vacuum cups maintain the orientation and alignment of the bent glass sheets relative to an assembly station after the edge alignment rolls are separated from the engaged edges.

The gist of the present invention relates to a method and apparatus for assembling sandwiches comrising hot bent glass sheets. One auxiliary feature of the present invention relates to an arrangement of vacuum cups to assemble a subassembly on a sandwich of one or more bent glass sheets with a sheet of flexible interlayer material that minimizes the entrapment of air or other vapors in the interface of the assembled subassembly or the interfaces of the assembled sandwich. Another auxiliary feature of the present invention relates to a mold having a shaped apertured wall and a method of using said mold to assemble a sheet of flexible interlayer material with one or more bent glass sheets. Still another ancillary feature of the present invention relates to aligning one or more bent glass sheet relative to a position occupied by a flexible interlayer sheet for assembly into a subassembly comprising a bent glass sheet and said flexible interlayer sheet or into a sandwich comprising a pair of bent glass sheets and said flexible interlayer sheet.

The benefits of the assembly apparatus and the features claimed in this case will be appreciated in the light of a description of a preferred embodiment that incorporates the claimed features that follows.

Brief description of the drawings

In the drawings that form part of the description of the preferred embodiment, and wherein like reference numbers are used to depict like structural elements.

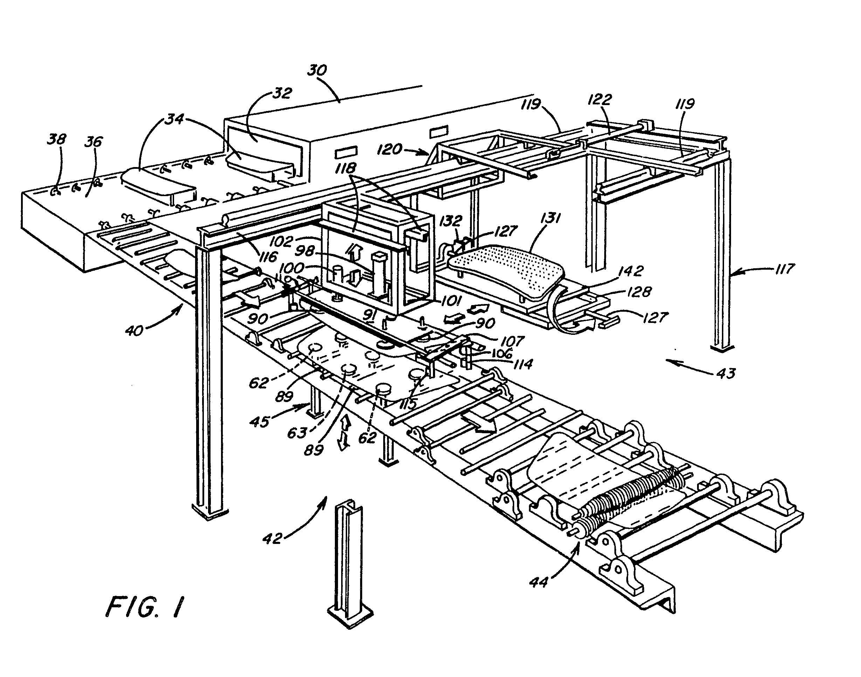

Fig. 1 is an isometric, schematic view of a station for assembling a sandwich of a flexible plastic interlayer (not shown) between a pair of bent glass sheets, shown separated, showing how the assembly station is located in close relation to a glass sheet bending lehr with a cross conveyor for conveying bent glass sheets from said bending lehr into said assembly station and in close relation to a vacuum mold loading station for applying a sheet of flexible interlayer material thereon for transfer to the assembly station while supported on the mold, with certain parts omitted to show other parts more clearly;

Fig. 2 is a front elevational, structural view of an empty assembly station of the present invention, with upper and lower sets of vacuum cups for supporting bent upper and lower glass sheets retracted and a shaped vacuum mold oriented in a convex elevational configuration for mounting a sheet of flexible interlayer material thereon, with parts omitted to show other parts more clearly;

Fig. 3 is a side elevation of the empty assembly station depicted in Fig. 2, with some parts broken away and some parts omitted to show certain parts more clearly;

Fig. 4 is a top plan view of the empty assembly station depicted in Figs. 2 and 3 with some parts broken away to show other parts;

Fig. 5 is a horizontal sectional view of the lower portion of the assembly station taken along the line 5—5 of Fig. 2;

Fig. 6 is an enlarged detailed view of a lower end vacuum cup and its supporting structure showing how the vacuum cup can be adjusted and titled;

Fig. 7 is a view taken at right angles to the view of Fig. 6;

Fig. 8 is an enlarged detailed view of a lower middle vacuum cup showing a spring loaded connection to its support structure;

Fig. 9 is an enlarged detailed view of one of the upper vacuum cups showing how it is mounted along an oblique axis relative to an upper vacuum cup support means;

Fig. 10 is an enlarged plan view of an end edge guide means oriented for guiding glass sheets of non-rectangular outline and apparatus for actuating movement of said end edge guide means;

Fig. 11 is a side elevation of the structure shown in Fig. 10;

Fig. 12 is an end elevation of the structure shown in Figs. 10 and 11;

Fig. 13 is a plan view of a vacuum mold having a curved apertured wall conforming·to the shape of the bent glass sheets, with parts of one wall broken away to show parts of an apertured wall and the arrangement of certain spacer elements that are distributed throughout the vacuum mold;

Fig. 14 is a partial cross-section and partial side elevation taken along the line 14—14 of Fig. 13; and

Fig. 15 is a cross-section of a rack and pinion type of rotary actuation for pivoting the vacuum mold, taken along the line 15—15 of Fig. 2;

Fig. 16 is a schematic front elevation view of the assembly station showing a bent glass sheet pair supported on a cross conveyor at the assembly station at the early stage of an assembly cycle;

Fig. 17 is a fragmentary schematic side elevational view of the assembly station also showing a vacuum mold loading station taken at the moment depicted in Fig. 16;

Fig. 18 is a view similar to that of Fig. 16 taken at an intermediate stage in the cycle of operation of the assembly station of this invention;

Fig. 19 is a view similar to that of Fig. 17 taken simultaneously with Fig. 18;

Fig. 20 is a view taken after the view of Fig. 18 and similar thereto, showing the assembly station in a late stage of operation; and

Fig. 21 is a view similar to that of Fig. 19, showing a side view of the assembly station at the moment depicted in longitudinal elevation in Fig. 20.

Description of the preferred embodiment

The invention can be realized in several embodiments.

In the preferred embodiment, the apparatus of the present invention is shown in an environment in which it is used to assemble a sandwich of a bent glass sheet pair including an upper bent glass sheet 11 and a lower bent glass sheet 12 with a flexible sheet 14 of interlayer material assembled in unwrinkled relation therebetween.

The sheets used to form the sandwich have similar outlines. Since the interlayer material shinks and expands differentially during thermal treatment required for lamination to glass sheets, it is preferred to cut the flexible sheets 14 of interlayer material to outline shapes having slightly larger dimensions than those of the bent glass sheets 11 and 12. The flexible sheets 14 are preferably made approximately (3/8 inch) 10 millimeters; longer and (1/4 inch) 6 millimeters wider than the corresponding dimensions of the bent glass sheets 11 and 12 to provide a border of flexible interlayer material extending about (3/16 inch) 5 millimeters beyond each longitudinal end and about (1/8 inch) 3 millimeters beyond each transverse side of the glass sheets between which they are assembled.

As best seen in Fig. 1, the environment comprises a bending lehr 30 of tunnel-like configuration having a lehr exit 32. A plurality of bending molds and carriage assemblies 34 traverse the bending lehr 30 and pass the lehr exit 32 onto a glass sheet unloading station 36 to which they are conveyed by a plurality of lehr conveyor rolls 38. The bending lehr is typical of the prior art.

Immediately to one side of the unloading station 36, the upstream end of a cross conveyor 40 is located. The cross conveyor 40 extends from its upstream end adjacent the unloading station 36 along a path over a short distance slightly longer than the longest of glass sheets to be processed and intersects an assembly station 42 to one side of which is located a vacuum mold loading station 43. The cross conveyor continues along a continuation of said path through a roll pressing apparatus 44 and beyond to an unloading station (not shown).

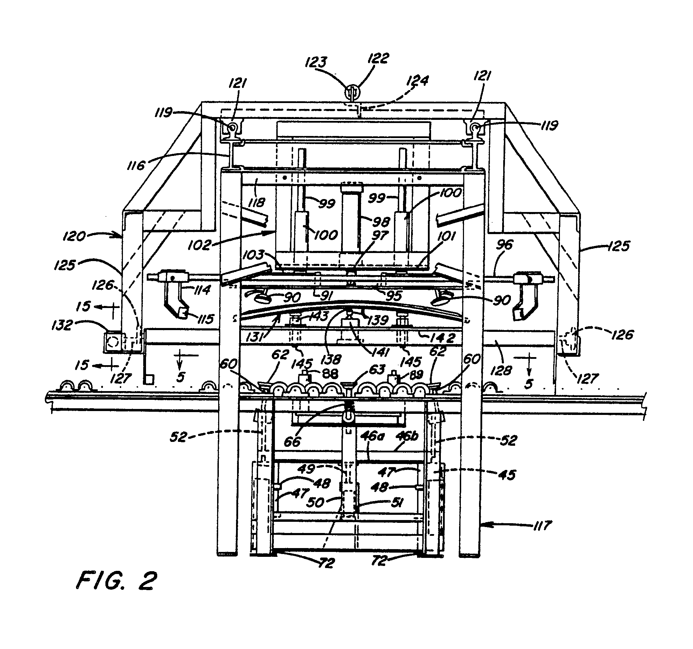

The assembly station 42 of the present invention comprises a support frame 45 (Fig. 2) adjustably supporting an open-sided table 46 for vertical movement. Table 46 comprises a horizontal plate 46a and a box-like frame 46b. The latter is provided with vertical guide rods 47 that slide in collars 48 (fixed to the support frame 45) to guide the table for vertical movement. A piston rod 49 extending upwardly from a vertically oriented piston cylinder 50 is connected to the horizontal plate 46a to move the table 46 vertically between a lower position below cross conveyor 40 and an upper position. The cylinder is rigidly mounted on a bracket 51 that is rigidly supported on the support frame 45.

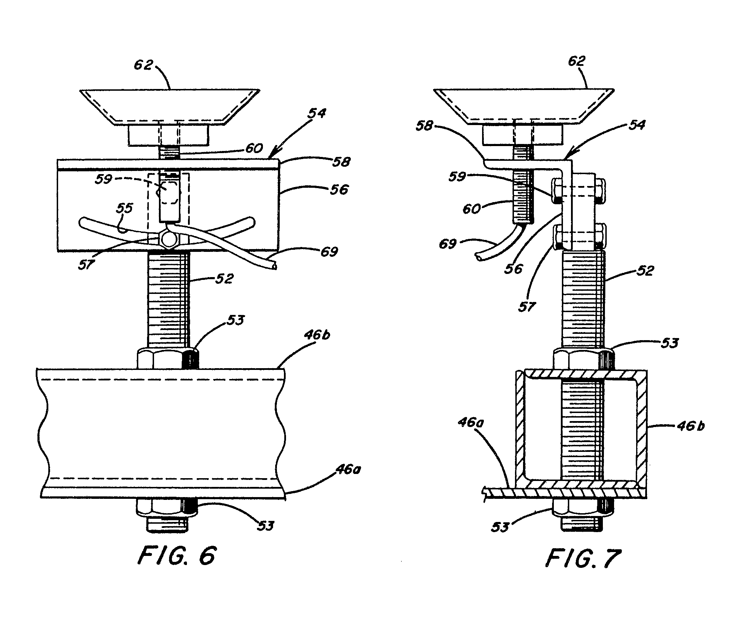

A plurality of externally threaded vertical rods 52 (Figs. 2, 3, 6 and 7) are adjustably attached to the table 46 by extending through aligned openings in the horizontal plate 46a and the box-like frame 46b and secured thereto by lock nuts 53. Each vertical rod 52 is attached to an angle member 54 at its upper end. Each angle member 54 comprises an arcuately slotted and apertured vertical flange 56, whose arcuate slot is indicated at 55, and a horizontal flange 58. A lower radial bolt 57 is fixed to the vertical rod 52 and extends through the arcuate slot of the arcuately slotted flange 56. An upper radial bolt 59 is fixed to the vertical rod 52 and extends parallel to the direction of the lower radial bolt 57 through an upper aperture of the slotted and apertured flange 56. Tightening nuts are provided to secure the lower radial bolt 57 in a desired position along the arcuate slot in the arcuately slotted flange 56 and to secure the upper radial bolt 59 in the aperture of flange 56. The angle members 54 are free to pivot about axes defined by the upper radial bolts 59 as limited by the length of the arcuate slots 55 when the bolts 57 and 59 are unsecured.

An externally threaded drilled out rod 60 is fixed to the horizontal flange 58 of each angle member 54. An end lower vacuum cup 62 is fixed to the upper end of the drilled out rod 60. In this manner, both the vertical position and the orientation of the end vacuum cups 62 can be adjusted so that the mean plane of the vacuum cup is parallel to the tangent of the bottom surface of the lower bent glass sheet 12 in the vicinity of the associated end lower vacuum cup 62. The orientation of each end vacuum cup is changed by loosening the arcuate slot connection and repositioning the bolts to another position along the arcuate slot and tightening the bolts of the corresponding angle member 54.

The vacuum cups are made of rubber and a preferred size is (4 inches) 10 centimeters in diameter. A preferred durometer for the vacuum cups is 45 Shore A. The end vacuum cups 62 are arranged in transversely aligned pairs located to engage a shaped glass sheet near each of its opposite longitudinal ends in transversely spaced areas.

An additional pair of lower central vacuum cups 63 similar to construction to the end vacuum cups 62 are also mounted to the upper ends of additional drilled out rods 60, which are mounted on additional angle members 54, which are disposed toward the center of the box-like frame 46b. Vacuum cups 62 and 63 serve as a lower set of flexible support members comprising a pair of transversely spaced end lower vacuum cups 62 at each end portion of an assembly area and a pair of transversely spaced central lower vacuum cups 63 at the central portion of the assembly area. The lower set of vacuum cups are located generally along a surface conforming to the shape of the bent glass sheets except for a slight upward biasing of the central lower vacuum cups 63. The lower set of vacuum cups 62 and 63 serve as a first set of flexible support members.

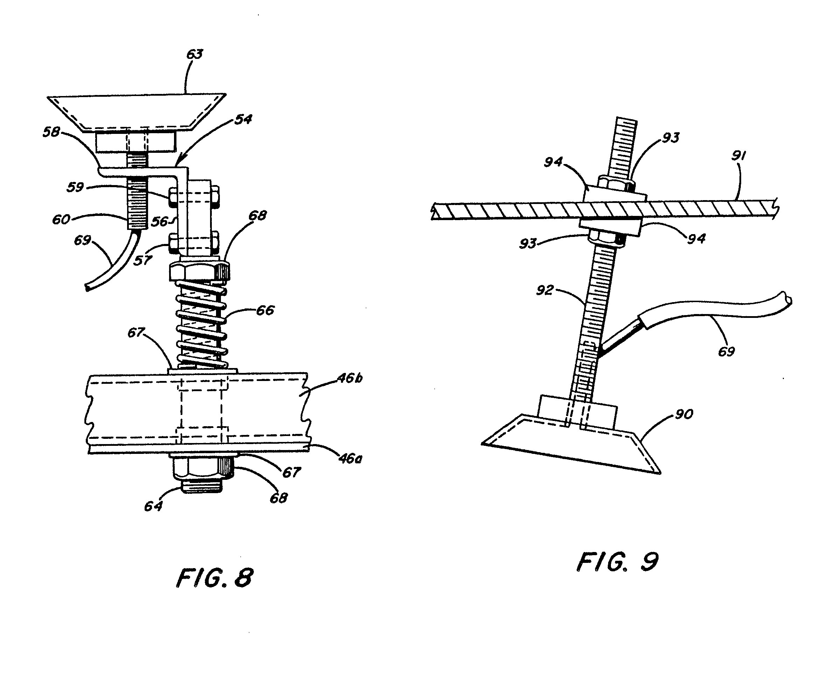

The middle angle members 54 are arcuately adjustable relative to a vertical rod 64 (Fig. 8), which is mounted in spring-loaded relation to the table 46 through a compression spring 66, which bears against a bushing 67 at its lower end and an upper of a pair of spring adjustment nuts 68 at its upper end. The vertical rods 64 extend through aligned openings in the central portions of box-like frame 46b and plate 46a and are locked at their lower ends to the table 46 by lower bushings 67 and lock nuts 68.

The spring 66 is so constructed and the vertical position of the vertical rod 64 is adjusted relative to the positions of adjustment of the end lower vacuum cups 62 that the middle lower vacuum cups 63 would occupy positions along a curved surface occupied by said end lower vacuum cups that is generally parallel to the shape of the lower bent glass sheet 12 except when springs 66 provide an upward bias to the middle lower vacuum cups 63 that bias the latter upwardly from the generally parallel surface for reasons to be explained later.

A flexible vacuum hose 69 is attached to each drilled-out rod 60 to provide a path of a source of vacuum (not shown). The hose 69 is also provided with a valved connection to transfer the path of communication with a vacuum source to one communicating with a source of pressurized air (not shown).

The vacuum cups 62 and 63 are located in spaces between adjacent conveyor rolls of the cross conveyor 40. This permits the lower set of vacuum cups 62 and 63 to move vertically in unison through the discontinuous plane of support provided by the rolls of cross conveyor 40 while maintaining their relative alignment and individual orientation on actuation of the piston rod 49 in vertically oriented piston cylinder 50. The upper and lower vertical positions of the piston rod are carefully controlled so that the lower set of vacuum cups 62 and 63 is below the level of cross conveyor 40 when the piston rod 49 is retracted, its uppermost position is defined by the height needed to lift the pair of bent glass sheet to enable the top surface of the upper glass sheet 11 to engage an upper set of vacuum cups at the upper position while the lower set of vacuum cups supports the lower bent glass sheet at a position where a flexible sheet of interlayer material is applied thereto at the assembly station 42.

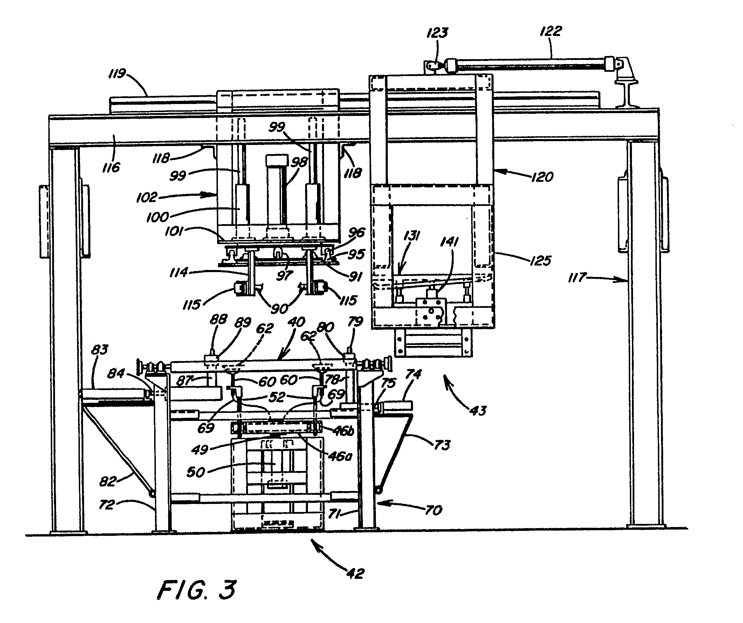

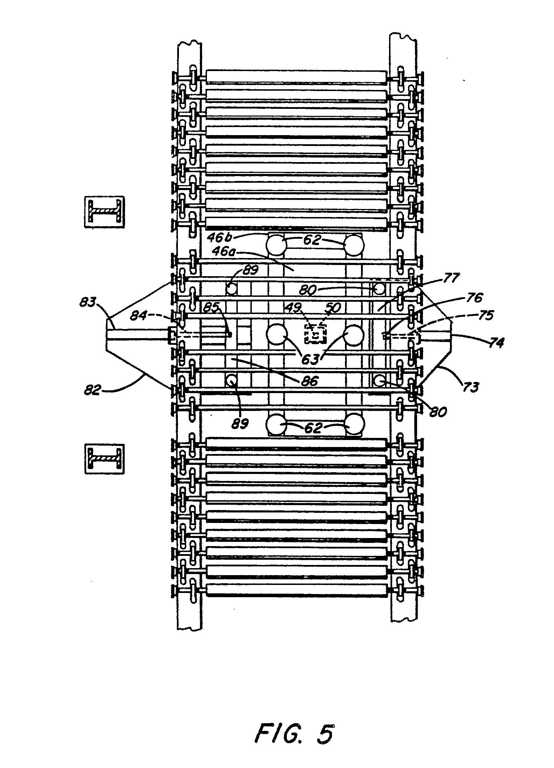

The cross conveyor 40 is supported on a conveyor support structure 70 (Fig. 3) having a plurality of vertical columns 71 and 72 along each side of the cross conveyor. The vertical columns support bearing housings for horizontally disposed conveyor rolls in a manner well known in the art. The conveyor rolls are arranged in sections to move in a controlled sequence in a manner well known in the conveyor art. A pair of adjacent vertical columns 71 also supports a bracket 73 on which is mounted a first horizontal cylinder 74 from which a piston rod 75 extends. A clevis 76 (see Fig. 5) is attached to the outer end of the piston rod 75, and in turn is attached to the middle of a cross arm 77. The ends of the cross arm 77 are mounted in horizontal guides (not shown) to insure that the cross arm 77 moves in a horizontal direction on actuation by piston rod 75. A pair of vertical guide rods 78 (Fig. 3) extend upward from the cross arm, one on each side of the clevis. Each guide rod 78 has a reduced, elongated upper portion 79 that receives a freely rotatable and vertically slidable linear guide roll 80 for engaging one side edge of a glass sheet during an assembly operation. This engaged side becomes the bottom side edge of the installed windshield. The guide rolls 80 will be referred to as the bottom side edge alignment rolls.

Mounted in similar manner to bracket 73, a pair of adjacent vertical columns 72 supports a bracket 82. A second horizontal cylinder 83 (opposed to cylinder 74) containing a piston rod 84 (similar to piston rod 75) is mounted thereon. A clevis 85 is attached to piston rod 84 at the middle of a cross arm 86, similar to the attachment of clevis 76 to piston rod 75 at the middle of cross arm 77. A pair of vertical guide rods 87 similar to vertical guide rods 78 with reduced upper portions 88 (similar to reduced upper portions 79) support guide rolls 89 in a manner similar to the support of guide rolls 80. Guide rolls 89 are called the top side edge alignment rolls because they engage the side edge of the glass that becomes the top side edge of the installed windshield. Guide rolls 80 and 89 are preferably composed of a material that does not harm glass such as soft rubber. A Shore A durometer of 50 to 55 is suitable for the side edge guide rolls 80 and 89.

Piston rods 75 and 84 move the pairs of side edge guide rolls 80 and 89 between laterally recessed positions and controlled glass side edge engaging positions against the opposite side edges of the bent glass sheet pair or of the lower bent glass sheet 12 to align the glass sheets transversely of one another and on opposite sides of a vertically extending space that intersects a desired assembly position within the assembly station. The free vertical sliding of guide rolls 80 and 89 along the reduced upper portions 78 and 87 of the guide rods 78 and 87 maintains the glass sheets in transverse alignment within said vertically extending space as long as the guide rolls 80 and 89 engage the side edges of the glass sheets. The free vertical sliding arangement permits the side edge engaging guide rolls 80 and 89 to fall by gravity to positions defined by the wider, lower portions of the guide rods 78 and 87, which serve as stops. The latter enable the side edge alignment rolls 80 and 89 to intersect the horizontal plane of support provided by the rolls of the cross conveyor 40 when the side edge engaging rolls 80 and 89 are laterally retracted and slid down on the vertical guide rods 78 and 87.

Two pairs of upper vacuum cups 90 are adjustably mounted relative to an apertured plate 91 for adjustment along axes extending obliquely of the plate. The upper vacuum cups 90 are located near the opposite longitudinal ends of the vertically extending space that a pair of bent glass sheets occupies during an assembly operation, and need not oppose the lower vacuum cups 62 or 63. The upper vacuum cups 90 serve as an upper or second set of flexible support members and are oriented to face a curved surface parallel to the curved surfaces defined by the pair of bent glass sheets and also parallel to the curved surface defined by the end lower vacuum cups 62 and the middle lower vacuum cups 63 when the latter are not biased upwardly.

As seen in Fig. 9, the mounting for each vacuum cup 90 comprises a threaded shaft 92 that is drilled axially for at least a portion of its length to provide an evacuation or pressurized air supply passage, a pair of lock nuts 93 disposed on opposite sides of apertured plate 91 and a pair of bevelled washers 94 having complementary bevels disposed on either side of the apertured plate 91 in position to receive the drilled threaded shaft 92 that extends through an aperture of the apertured plate 91. A vacuum hose 69 communicates with the drilled portion of the threaded shaft 92 to communicate each upper vacuum cup 90 with a vacuum source or a source of pressurized air through suitable valve means (not shown).

The upper vacuum cups 90 may be made of the same size, material and construction as the lower vacuum cups 62 and 63. Turning the complementary bevelled washers 94 about the axis of shaft 92 enables one to orient the plane of each upper vacuum cup 90 to bring the associated cup in flatwise relation relative to the tangent to the top surface of the upper bent glass sheet 11 in the area of engagement.

The orientation of the upper vacuum cups 90 may also be changed when required to conform to different glass sheet shapes by disassembling the threaded shafts 92 from the apertured support plate 91, removing the set of bevelled washers 94 and reassembling the threaded shafts 92 to the apertured plate with complementary bevelled washers having a different bevel from those removed. Using either method, the orientation of the upper vacuum cups 90 is arranged to have the vacuum cups 90 parallel to the mean datum plane of the bent glass sheet in the portion of the top surface of the upper glass sheet that it engages and to have the upper set of vacuum cups 90 supported generally along a curved surface parallel to the contour of the bent glass sheets 11 and 12.

A pair of shaft rail supports 95 is connected to the upper side of plate 91, as seen in Figs. 2, 3, 10, 11 and 12. Each shaft rail support 95 supports a longitudinal rail 96, described as longitudinal as it extends longitudinally of the path defined by the cross conveyor 40.

A clevis 97 attaches the upper surface of apertured plate 91 to the lower end of a vertically extending piston rod that moves relative to a vertical piston cylinder 98. Three vertical guide rods 99 also extend vertically upward from apertured plate 91 through fixed bearing housings 100 to help guide movement of plate 91 in a vertical direction in response to movement of the piston rod in piston cylinder 98. The fixed bearing housings 100 are securely attached to a support plate 101 extending across the bottom of a superstructure 102. The support plate 101 also supports the piston cylinder 98. It is apparent that this arrangement causes the upper vacuum cups 90 to move as a set within the vertically extending space defined by the outlines of properly aligned bent glass sheets 11 and 12 in response to actuation by the piston extending from piston cylinder 98 without changing the orientation or relative position of each upper vacuum cup 90 relative to the other vacuum cups 90 of the upper set. Therefore, when a properly aligned upper bent glass sheet 11 engages the upper set of vacuum cups 90, the upper bent glass sheet is incapable of becoming misaligned and/or misoriented while it remains engaged by the upper vacuum cups 90 and moves in unison with the vacuum cups 90 in a vertical direction within the vertically extending space.

Movement of the piston operating from the vertical piston cylinder 98 is controlled between an upward position wherein the upper set of vacuum cups 90 are supported along a curved surface generally parallel to the upper position of the upper bent glass sheet 11 when the latter engages the upper set and a lower position wherein the upper bent glass sheet held thereagainst is moved downward to the vicinity of the top surface of the lower glass sheet 12 supported by the lower set of vacuum cups in their intermediate positions.

Another feature of the illustrative embodiment of assembly apparatus comprises longitudinal end edge alignment means. While the particular end edge alignment means described is for use to align non-parallel or parallel longitudinal edges of hot bent glass sheets, it is understood that this longitudinal end edge alignment means is also suitable for use in aligning one or more bent glass sheets at temperatures different than the residual temperapture of the bent glass sheets.

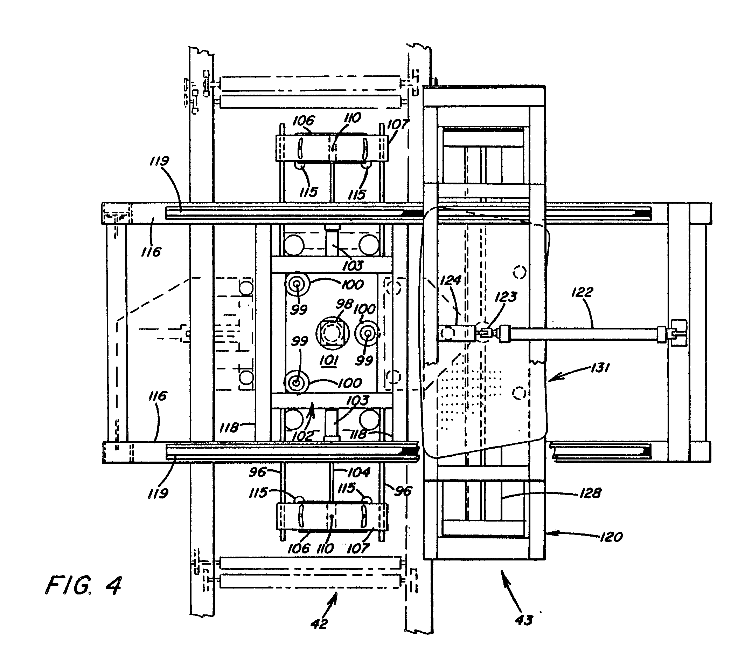

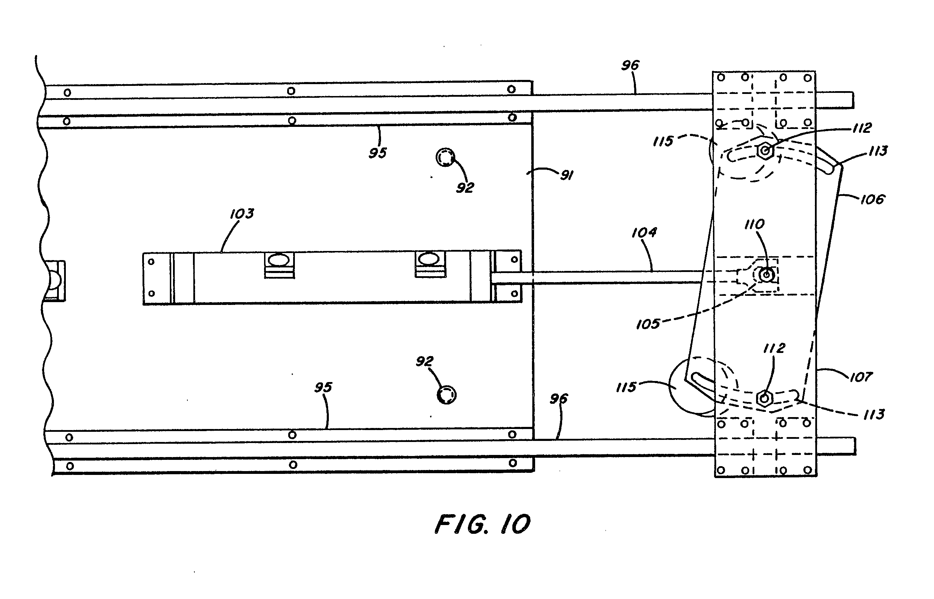

Also attached to the upper surface of plate 91 are a pair of horizontal cylinders 103 (only one of which is shown in Figs. 10, 11 and 12). The cylinders 103 (also shown in Fig. 4) extend longitudinally of the cross conveyor 40 in opposite directions with piston rods 104 extending longitudinally upstream and downstream relative to cross conveyor 40. A clevis 105 (Figs.

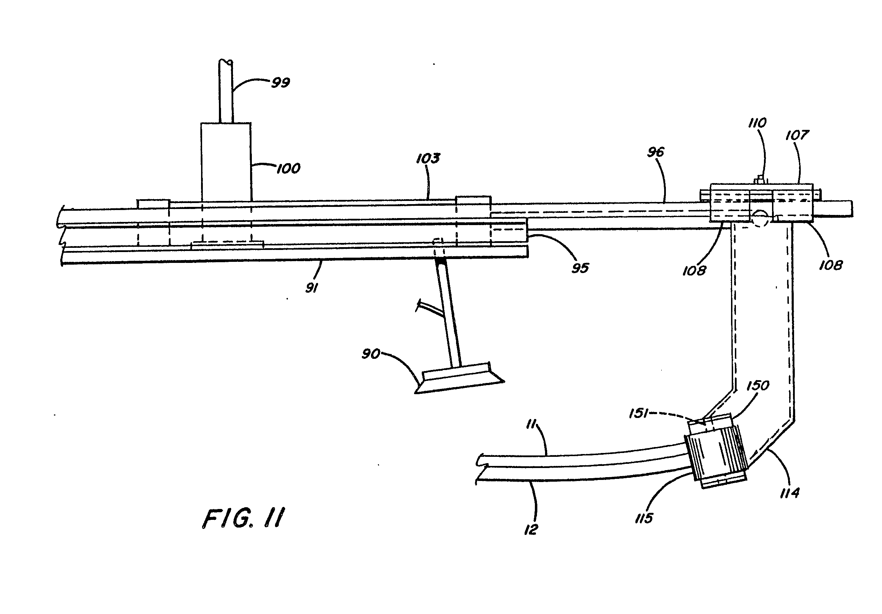

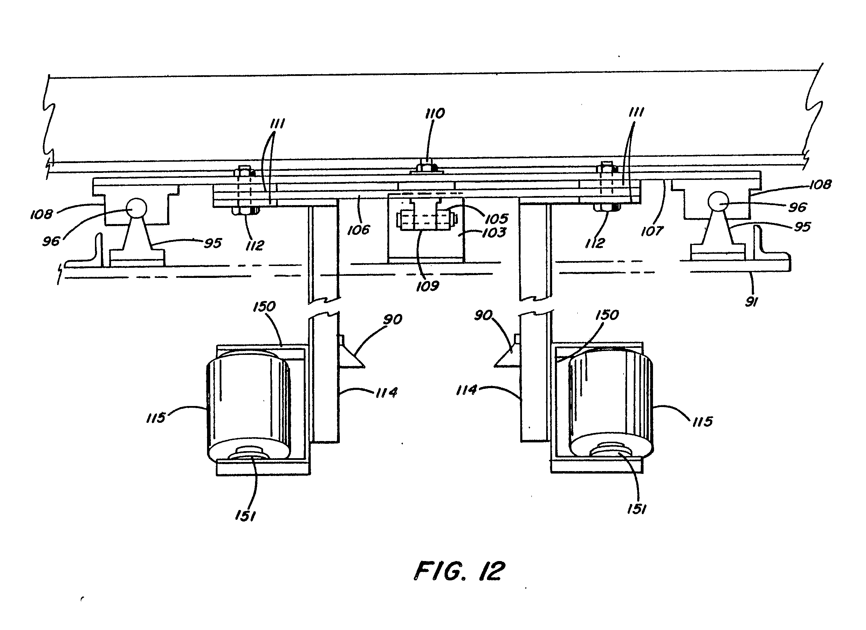

10 and 12) attaches the outer end of each piston rod 104 to an arcuately slotted plate member 106. The latter is pivotally attached to a bearing support member 107 through a pivot pin 110 (Figs. 4, 10 , 11 and 12). The member 107 has bearing housings 108 (Figs. 11 and 12) extending downward from its lower surface in such a manner that each pair of bearing housings slidably engages one or the other longitudinal rails 96.

An eye member 109 (Fig. 12) extending through an aperture in plate member 106 is fixed to bearing support member 107 and is attached to the clevis 105 (Fig. 12). The arcuately slotted plate member 106 also receives the pivot pin 110 in such a manner that the arcuately slotted plate member 106 is free to rotate in a horizontal plane about a vertical pivot axis defined by eye member 109. Layers 111 (Fig. 12) of a low friction material, such as various halogenated polyethylene compositions sold commercially under the trademarks PACTENE and TEFLON, are applied against the major surfaces of the arcuately slotted plate member 106 to facilitate its rotation. A pair of shoulder bolts 112 (Figs. 10 and 12) with suitable lock nuts extends through each of the arcuate slots 113 of the arcuately slotted plate member 106 and aligned bolt openings in the bearing support member 107 to fix the orientation of the arcuately slotted plate member 106.

A pair of angled supports 114 (Figs. 2, 3, 11 and 12) is rigidly attached to each arcuately slotted plate member 106 and terminates in a roll housing 150 (Figs. 10 to 12) that supports an obilquely extending axle 151 for supporting an end edge engaging roll in the form of a linear rotating roll 115 that is in free rotating relation with said axle and which has an axial length sufficient to engage the longitudinal end edge of glass sheet pairs having a range of depths of bend and degrees of curvature within a family of patterns for which the apparatus is designed. Piston rods 104 (Figs. 4 and 10) actuate longitudinal movement of the linear rotating rolls 115 between carefully controlled positions of the piston rods that bring the rolls 115 toward and away from engagement with one or the other opposite longitudinal end edges of a bent glass sheet pair to form part of longitudinal edge alignment means that either aligns the pair of bent sheets in proper longitudinal alignment with the assembly station 42 or retracts out of engagement with said sheets. The linear rotating rolls are supported for movement in horizontal directions in a horizontal plane vertically spaced from the horizontal support defined by the rolls of the cross conveyor 40 and from the side edge alignment rolls 80 and 89.

The lines of orientation of the tangents common to the linear rotating rolls 115 are shown in Fig. 10 in the orientation required to engage glass sheets of non-rectangular outline. However, these lines can be adjusted to conform to any desired oblique orientation of the longitudinal end edge at the corresponding longitudinal end portion of the shaped glass sheets to be assembled by adjusting the orientation of the arcuately slotted plate member 106 relative to the bearing support member 107 about the pivot pin 110 (which serves as a common pivot axis for a pair of linear rotating rolls 115) and locking the shoulder bolts 112 securely along arcuate slots 113 when the arcuately slotted plate member 106 is in a desired orientation about said common pivot axis.

The linear rotating rolls 115 are free to rotate about the axles 151 that are oblique to the vertical and approximately parallel to the orientation of the end edge surfaces of the most sharply bent glass sheets of the family of patterns for which the apparatus is designed. The linear rotating rolls can be used to align the longitudinal end edges of glass sheets bent to angles of bending ranging from the exact angle of sharpest bend to angles of approximately 45 degrees more curvature than the angle of sharpest bend. In other words, the linear rotating rolls are mounted to rotate about oblique axes that extend upwardly and inwardly from the vertical at a minimum oblique angle that is exactly parallel to the longitudinal edge surface of glass sheets bent to a concave elevational configuration. The maximum oblique angle for mounting the linear rotating rolls can exceed the minimum angle by as much as approximately 45 degrees, depending on the thickness and difference in length between the upper and lower bent glass sheets of the pair being assembled. The rolls 115 are made of a soft rubber composition, preferably 50 to 55 Shore A durometer so as not to mar the glass edges on engagement therewith, even when the rolls 115 do not abut in exact parallel relation to the end edges of the glass. The length of the linear rotating rolls 115 is sufficiently long to permit the rolls to engage longitudinal end edges of bent glass sheet pairs that are bent to various depths of bend within the family of patterns for which the apparatus is designed.

Superstructure 102 is rigidly fixed to a pair of upper horizontal cross beams 116 (Figs. 1 to 4) of a main frame structure 117 by a pair of longitudinal angles 118. Each of the horizontal cross beams 116 supports a transverse horizontal rail 119. The latter rails extend between the assembly station 42 and the flexible interlayer sheet loading station 43. A carriage 120 is suspended from rails 119 through bearing housings 121. A piston from a cylinder 122 is connected through a clevis 123 to a cross member 124 forming part of the superstructure of the carriage 120. The piston 122 is pivotally mounted on the main frame structure 117 so that its piston rod actuates movement of the carriage 120 along the rails 119 between the vacuum mold loading station 43 and the assembly station 42.

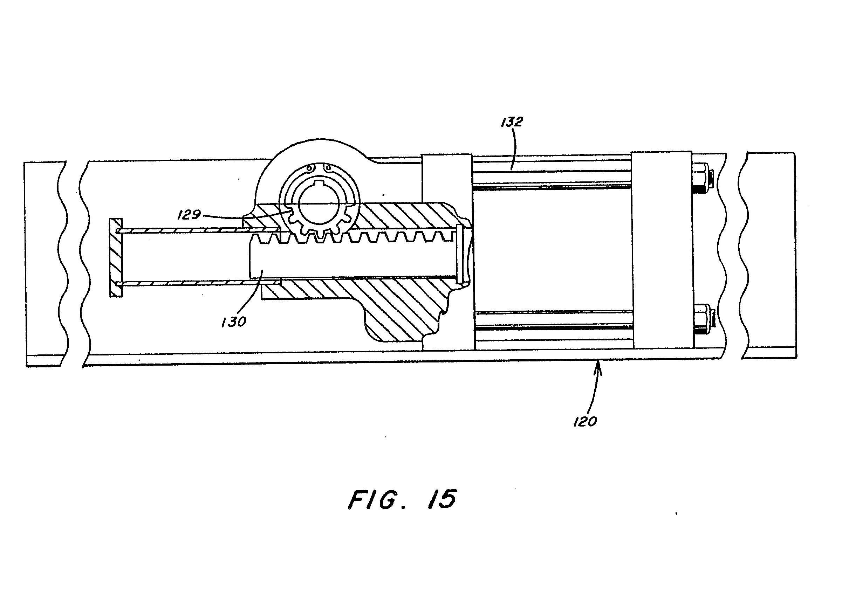

The carriage 120 has two depending brackets 125 (Figs. 2 and 3) that support a pair of longitudinally and horizontally aligned bearing housings 126 (Fig. 2) that receive a pair of stub axles 127 interconnected by a box-like housing 128 of

rectangular cross-section. A mounting plate 142 is attached to housing 128 for rotation therewith. A rotary actuator (Fig. 15) comprises a pinion 129 operatively connected to one of the stub axles 127 to rotate the box-like housing 128 and its attached mounting plate 142 through an angle of 180 degrees about the horizontal longitudinal axis defined by the stub axles 127. Referring to Fig. 15, the pinion 129 fixed to rotate with one of the stub axles 127 engages an elongated rack 130 which substitutes for a piston rod for linear movement relative to a piston housing 132 (Figs. 1 and 2). The latter is supported on a lower horizontal beam of carriage 120. Linear movement of the rack 130 causes pinion 129 to rotate, thereby causing the box-like housing 128 and its mounting plate 142 to rotate about stub axles 127.

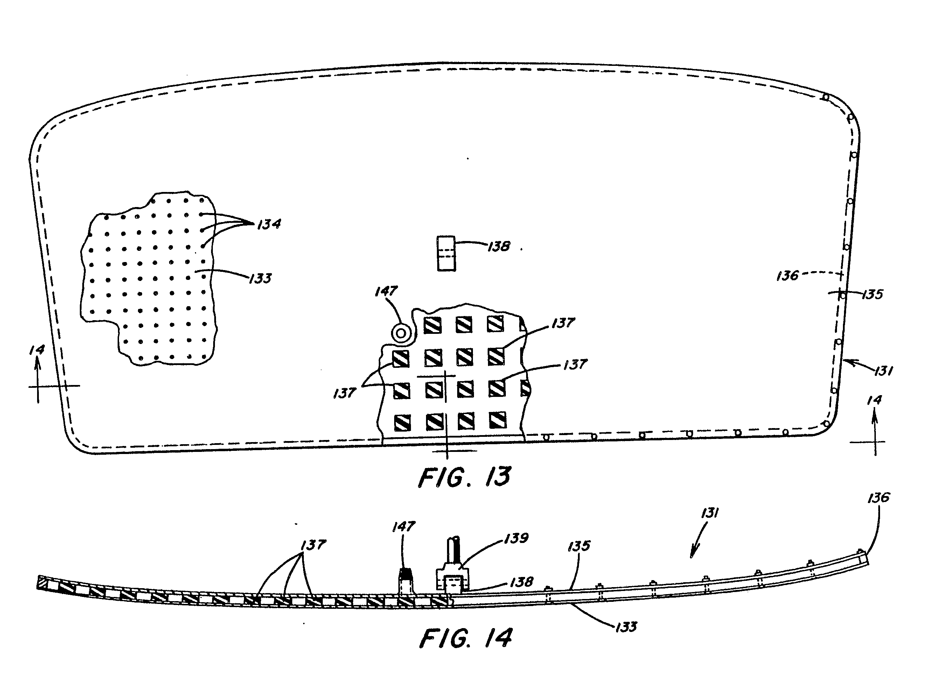

A vacuum chamber 131 (Figs. 13 and 14) has a convexly curved apertured wall 133 having an array of apertures 134 and a concavely curved wall 135. Both walls are constructed of 1/8 inch (3.1 millimeters) thick aluminum sheets. The sheets are separated by a rigid, shaped marginal separator frame 136 and an array of spacers 137 formed of rubber blocks. The latter are distributed throughout the extent of the vacuum mold 131 to maintain a space between walls 133 and 135 of uniform thickness enclosed within the marginal frame 136.

The rubber spacers are (one inch) 2.54 centimeters square and (one-half inch) 1.27 centimeters thick and are separated from one another to form criss-crossing rows. Sufficient rigidity to maintain a space of constant width is provided with rubber blocks having a Shore A durometer of 55. The apertures 134 form a checker-board array on (one inch) 2.54 centimeters centers and are (1/32 inch) 0.8 millimeters in diameter. A series of tightening bolts extend through the marginal separator frame 136 and through aligned marginal apertures in walls 133 and 135 to provide a tightly closed unitary vacuum mold.

As seen in Figs. 2, 13 and 14, an eye 138 is welded to the geometric center of concavely curved wall 135 and engages a clevis 139 (Fig. 2). The latter is fixed to the end of a rod that extends from a piston housing 141. The latter is mounted to the box-like housing 128 and passes through an opening in the mounting plate 142. The mounting plate 142 supports a series of bearing housings 143 which receive alignment pins 145. The latter extend from the concavely curved wall 135 of the vacuum mold 131 to which they are fixed. The rod from piston housing 141 adjusts the distance of the vacuum mold 131 from mounting plate 142. When the piston from cylinder 122 extends, carriage 120 occupies a position to support the vacuum mold 131 in proper longitudinal and transverse alignment with the vertically extending space within which can be found the aligned bent glass sheets 11 and 12 at the assembly station 42.

A vacuum stem 147 (Figs. 13 and 14) extends from the concavely curved wall 135 of the vacuum mold 131 and is connected to a line that is connected through suitable valves (not shown) to either a vacuum source or a source of pressurized air, as desired during an assembly cycle. If desired, a separate stem can be provided to connect directly to a source of pressurized air in combination with the vacuum stem 147.

When the rack 130 moves linearly with respect to pinion 129, the vacuum mold 131 rotates with the box-like housing 128 and mounting plate 142. The length of the rack is such as to allow the vacuum mold 131 to rotate 180 degrees about a horizontal axis defined by the stub axles 127. The piston within piston housing 132 controls the rotational movement of the vacuum mold 131 with the box-like housing 128 and mounting plate 142 relative to the carriage 120 from an orientation wherein the apertured wall 133 assumes a convex elevational configuration to one where the apertured wall assumes a concave elevational configuration.

In addition, the vacuum mold 131 moves with the carriage 120 between the vacuum mold loading station 43 to one side of the path of glass sheet movement defined by cross conveyor 40 and the assembly station 42 across the cross conveyor 40. The piston in housing 122 and clevis 123 actuate this movement cycle through cross member 124 of the carriage 120.

Extension of the rod from piston 122 is inhibited until the rack 130 moves to the end of its permitted movement at which time the vacuum chamber 131 rotates with mounting plate 142 to an orientation at which the curved apertured wall 133 has a concave elevational configuration and the upper set of vacuum cups 90 occupy their raised positions and the lower set of vacuum cups 62 and 63 occupy their uppermost positions. The rod extends from piston 122 to move the oriented vacuum chamber 131 into a position at the assembly station 42 where the vacuum chamber 131 is directly aligned over the lower glass sheet 12. With the rod from piston 122 fully extended, the rod from piston housing 141 is fully extended to enable the flexible sheet 14 of interlayer material to engage the upper surface of the lower bent glass sheet 12. In order for this desired alignment to take place properly, the glass edge engaging positions of the linear rotating rolls 115 and side edge engaging rolls 80 and 89 must be carefully adjusted by precise adjustments of the location and stroke of the actuating pistons that control the movement of hte edge engaging rolls so that all four pairs of rolls 115, 80 and 89 are in glass engaging positions that insure the alignment of the lower bent glass sheet 12 with the position of the vacuum mold 131 at the assembly station 42 when the rod from piston 122 is fully extended.

Piston rod 49 actuates the lifting of the vertically movable table 46 in response to the arrival of a bent glass sheet pair at the assembly station 42 along cross conveyor 40. The end lower vacuum cups 62 are oriented to face upward and inward so as to be in flat facing relation to different localized portions of the bottom surface of the lower glass sheet of the bent glass sheet pair. The upper vacuum cups 90 are oriented and arranged so that each upper vacuum cup 90 is aligned to be in flat facing relation to different localized portions of the top surface of the upper glass sheet of the bent glass sheet pair. The middle lower vacuum cups 63 are oriented to be in flat facing relation with different localized areas in the central portion of the longitudinal dimension of the bottom surface of the lower glass sheet of the bent glass sheet pair and are biased upward by springs 66 to be a fraction of the glass sheet thickness higher than the mean datum plane of the curvature defined by the bottom surface of the glass sheet at the localized areas of engagement. This arrangement biases the lower glass sheet upwardly a slight amount to guard against entrapment of air or other vapor when the flexible interlayer sheet 14 is applied against the top surface of the lower bent glass sheet 12 when the subassembly is made, and also when the upper bent glass sheet 11 is applied against the top surface of the interlayer sheet when the subassembly is converted into a sandwich to be laminated. To further insure the ability of the springs 66 to bias the lower middle vacuum cups 63 upwardly, the upper set of vacuum cups 90 has no vacuum cups in the central portion of the vertically extending space that intersects the assembly station 42.

Since the end lower vacuum cups 62 and the middle vacuum cups 63 are mounted onto the table 46 in fixed adjustment thereto, piston rod 49 also actuates movement of the lower vacuum cups 62 and 63 in unison to lift the lower glass sheet 12 from the cross conveyor 40 when raised. The upper vacuum cups 90 are adjustably fixed to apertured plate 91 which is actuated by the piston in piston cylinder 98 to move the upper vacuum cups 90 vertically in unison with the apertured plate 91. The parallel vertical axes of the piston cylinders 50 and 98 and the vertical guide rods 47 and 99 insure that the sets of vacuum cups move only in vertical directions within the vertically extending space of the assembly station 42. This insures maintaining alignment of the upper bent glass sheet 11 with the lower bent glass sheet 12 even when separated. Such alignment maintenance facilitates replacing the upper bent glass sheet in alignment with the lower bent glass sheet when the sandwich is assembled.

The automatic assembly of sandwiches of a pair of bent glass sheets and a sheet of interlayer material depends on the coordination of operation of various actuating mechanisms of the illustrative embodiment including the cross conveyor 40, the piston in piston cylinder 98, the application of vacuum or pressurized air to the vacuum cups 90, 62 and 63 and vacuum mold 131, the piston rod 49, the piston rods 75 and 84, the piston rods 104, the piston from piston cylinder 122 and the operation of the rack 130 to rotate the pinion 129 and the vacuum mold 131. A typical cycle will now be described.

The timing sequence of the various actuating mechanisms can be controlled by any well known timer control circuit or each actuating mechanism can actuate a limit switch to control the timing of the actuation of a succeeding actuating mechanism in the system. Either arrangement is well known in the art of controlling an operating cycle for different elements in timed sequence and is suitable to operate the apparatus just described.

At the beginning of an assembly cycle, the vacuum mold 131 is oriented into a convex elevational configuration and is located at the vacuum mold loading station 43 to one side of the cross conveyor 40 as the carriage 120 is retracted to that station. In this position, an operator is able to mount a sheet 14 of flexible interlayer material in unwrinkled condition onto the upwardly facing surface of convex elevation of the vacuum mold 131. Vacuum is applied at this time to the vacuum mold to hold the flexible sheet of interlayer material thereagainst in the orientation at which it is applied. While not absolutely necessary, it is convenient to use sheets of interlayer material of slightly larger outline than the outlines of the bent glass sheets 11 and 12 to assure complete alignment between the flexible sheet 14 of inter-layer material and the bent glass sheets 11 and 12 to be assembled.

At the start of cycle, the lower vacuum cups 62 and 63 are supported in spaced relation to the bottom surface of the lower glass sheet of the pair of bent glass sheets as the latter arrives at the assembly station 42 supported on rolls of the cross conveyor 40. The latter rolls stop rotating when the glass sheet pair arrives at the assembly station 42. The pair of bent glass sheets stops in approximately the same position and orientation it will occupy during the assembly operation. While it is unusual for the bent glass sheets in the pair to become misaligned, the glass sheets may sometimes be misliagned relative to one another in their transverse dimension. It is less likely but also possible that the bent glass sheet pair stops at a position that is misaligned longitudinally and/or transversely of the desired position. The bent glass sheet pair may also be misoriented. Side edge alignment rolls 80 and 89 and the linear rotating rolls 115 of the end edge alignment means correct these problems in a manner to be described in detail.

The lower middle vacuum cups 63 are biased upwardly to be closer to the bottom surface at the central portion of the lower bent glass sheet 12 than the end lower vacuum cups 62 are spaced from the end portions of the bottom surface that they face. Since all the lower vacuum cups 62 and 63 move in unison with table 46, the middle lower vacuum cups 63 engage areas in the central portion of the lower glass sheet 12 before the end lower vacuum cups 62 engage its end portions so as to flex the lower glass sheet 12 upward in its central portion. At the beginning of the cycle, neither vacuum nor pressurized air is applied to any of the lower vacuum cups 62 and 63 or the upper vacuum cups 90.

As the pair of bent glass sheets enters the assembly station 42, the bottom side edge alignment rolls 80 and the top side edge alignment rolls 89 are retracted from engaging the longitudinal side edges of the bent glass sheets that eventually form the bottom and top side edges of the bent laminated windshield that is fabricated. Also, the linear rotating rolls 115 of the end edge alignment means are retracted from one another to be spaced apart farther than the chord length of the bent glass sheets of the pair. Each linear rotating roll 115 of each pair is arranged relative to the other roll 115 at the end along a plane that is parallel to the line defined by the points along the end edge of the bent glass sheets that usually extend obliquely of the length of the glass sheets (forming the so-called A-post line). This is accomlished by pivoting each arcuately slotted plate member 106 about pivot pin 110 which forms the common pivot axis for each pair of linear rotating rolls 115 to orient and lock arcuately slotted plate member 106 at a desired orientation relative to bearing support member 107 to conform the common tangent lines between linear rotating rolls 115 to the orientation of the A-post lines. The linear rotating rolls 115 rotate freely about obliquely extending axes that are approximately parallel to the end edge portions of the bent glass sheet pair.

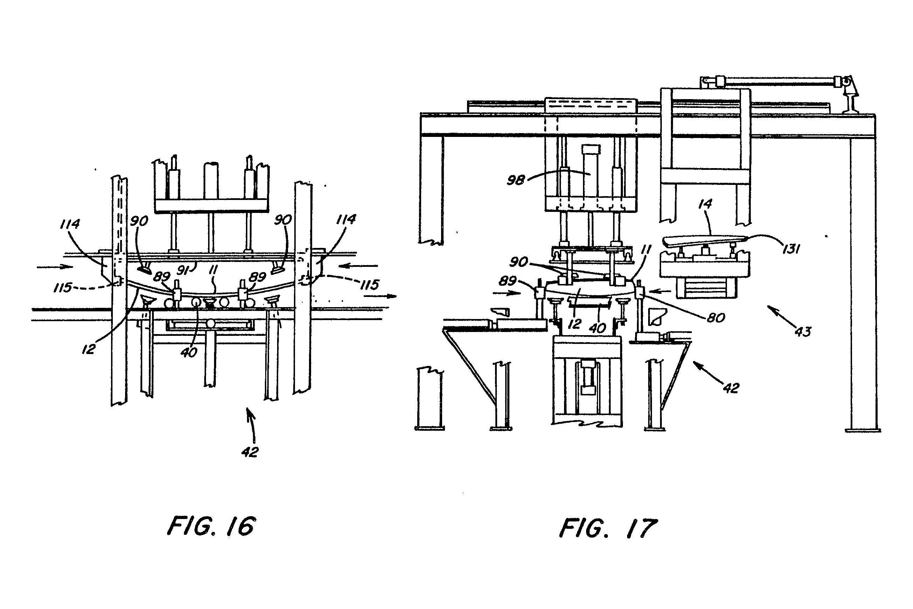

When the pair of bent glass sheets arrives at the assembly station 42, the top and bottom side edge alignment rolls 89 and 80, respectively, are in their laterally separated positions. Piston 98 extends to lower the upper set of vacuum cups 90 into a lowered position a slight distance above the top surface of the upper glass sheet 11 when the lower glass sheet 12 rests on the rolls of cross conveyor 40. At this time, piston rods 84 and 75 and 104 move inward toward their respective glass edge engaging positions in unison to cause side edge alignment rolls 89 and 80 to move toward the inward positions defined by stops controlling transverse extended movement of the piston rods 84 and 75 and the linear rotating rolls 115 move toward inward positions defined by stops controlling longitudinal retracted movement of piston rods 104. These glass edge engagement positions are shown in Fig. 16 and 17.

While the arcuately slotted plate members 106 are shown as extending parallel to the bearing support members 107 in Figs. 4 and 11 to support the linear rotating rolls 115 along lines normal to the path defined by cross conveyor 40 for aligning glass sheets of rectangular configuration, it is understood that the plate members 106 may be fixed in any angular orientation about pivot pins 110 relative to the bearing support members 107, such as in Fig. 10, to have the linear rotating rolls 115 located with their corresponding portions aligned with transverse lines extending obliquely to intersect spaced engagement positions along the end edges of the bent glass sheet pair. Thus, the side edge alignment rolls 89 and 80 and the linear rotating rolls 115 move into glass edge alignment positions to align and orient the bent glass sheet pair comprising bent sheets of non-rectangular outline relative to the vertically extending space intersecting the desired assembly positions for the sheets 11, 12 and 14. Such engagement of rolls 80, 89 and 115 with the edge of the bent glass sheet pair orients and aligns the pair of bent glass sheets properly relative to one another and also orients and aligns a reference line through the thickness of the bent glass sheet pair that coincides with a corresponding reference line through the assembly position for the flexible sheet of interlayer material 14 that is defined by complete extension of the rod from piston 122.

The lower vacuum cups 62 and 63 remain retracted at this stage of the cycle as depicted in Figs. 16 and 17. The lower bent glass sheet 12 rests on the rolls of cross conveyor 40 while the upper bent glass sheet 11 nests over lower bent glass sheet 11 when the edge alignment rolls 115, 80 and 89 orient and align the bent glass sheet pair.

With the pair of bent glass sheets properly aligned and oriented, the linear rotating rolls 115 are retracted and the table 46 is lifted so that the central pair of lower vacuum cups 63 first engages the central portion of the lower glass sheet 12 to bias the central portion slightly upward and then all the lower vacuum cups 62 and 63 engage the biased lower glass sheet. The difference in spacing to the bottom surface of the glass sheet from the spring loaded central lower vacuum cups 63 compared to that of the unloaded end lower vacuum cups 62 is exaggerated in Figs. 16 and 17. In the meantime, the apertured plate 91 has been lowered to a position wherein the upper vacuum cups 90 are near the top surface of the upper bent glass sheet of the pair. The limit of extension of the piston from piston cylinder 98 defines the lowered positions of the apertured plate 91 and the upper vacuum cups 90.

The upward movement of the table 46 continues to a raised position where the top surface of the upper bent glass sheet 11 engages the upper vacuum cups 90. The top and bottom side edge alignment rolls 89 and 80 rise on the reduced upper portion 88 and 79 of vertical guide rods 87 and 78 due to friction against the rising bent glass sheet pair as the table 46 rises with the lower vacuum cups 62 and 63. The side edge alignment rolls 89 and 80 continue to align the bent glass sheet pair transversely until such time as the vacuum cups 62, 63 and 90 engage the bent glass sheets 12 and 11, respectively and vacuum is applied to the vacuum cups. In the meantime, the rack 130 has started to move to rotate pinion 129, box-like housing 128, mounting plate 142 and vacuum mold 131. The latter maintains its vacuum to hold the flexible interlayer sheet thereagainst as it rotates. The linear rotating rolls 115 are fully retracted at this stage of the cycle.

At this stage of the assembly cycle, retraction of the linear rotating rolls 115 actuates the application of vacuum to the vacuum cups 62, 63 and 90 so that both sheets of the bent glass sheet pair are held securely in position by vacuum so that it is no longer necessary to hold the side edge alignment rolls 89 and 80 against the opposite side edges of the bent glass sheet pair. Consequently, with vacuum on upper vacuum cups 90 and on lower vacuum cups 62 and 63, piston rod 84 is retracted to retract the bottom side edge alignment rolls 80 and piston rod 75 is retracted to retract the top side edge alignment rolls 89. With frictional engagement against the side edges of the glass sheet pair ended, rolls 80 drop on vertical guide rods 78 and rolls 89 drop on vertical guide rods 87 to positions in horizontal alignment with but laterally recessed from the positions that will intersect the bottom and top side edges of the next bent glass sheet pair to arrive at the assembly station 42.

While it is most convenient for design purposes that the specific embodiment described provides that both pairs of linear rotating rolls 115 are longitudinally movable equal distances in unison between longitudinally spaced positions separated by distances greater than the longitudinal distances between portions of the longitudinal end edges engaged by corresponding linear rotating rolls of each pair and positions engaging said glass end edge portions simultaneously, it is understood that longitudinal alignment can be obtained by moving said pairs of linear rotating rolls different distances longitudinally to engage or disengage the adjacent end edge of the bent glass sheet pair. Similarly, while both pairs of side edge alignment rolls 80 and 89 are more conveniently designed to be transversely movable in unison for equal distances between transversely spaced positions of disengagement separated by distances greater than the width of the widest of a family of glass sheet patterns to be assembled measured between corresponding positions of the opposite side edges engaged by said side edge alignment rolls and side edge engaging positions approximately equal to the transverse distance between said corresponding portions, it is understood that it is also permissible to move the pairs of side edge engaging rolls 80 or 89 different transverse distances in a transverse direction to obtain appropriate transverse alignment. However, the bent glass sheets must be engaged simultaneously by both pairs of linear rotating rolls 115 and both pairs of side edge alignment rolls 80 and 89 before the vacuum cups 62, 63 and 90 engage the facing surfaces of the bent glass sheets of the pair. Only the linear rotating rolls 115 are disengaged from the glass sheet and edges and the side edge alignment rolls 80 and 89 remain engaged when the lower vacuum cups engage the bent glass sheet pair prior to moving the pair off the support provided by the cross conveyor 40.

Vacuum continues via the upper vacuum cups 90 as well as the lower vacuum cups 62 and 63 while the rack 130 continues to move to rotate the box-like housing 128, the mounting plate 142 and its connected vacuum mold 131 in a counter-clockwise direction toward an orientation of concave elevational configuration in which the shaped vacuum mold 131 continues to support the flexible sheet of interlayer material thereagainst by continued application of vacuum. Now, the apparatus is ready to separate the upper and lower glass sheets from one another.

At this time, the piston in piston cylinder 98 is ready to begin to raise the apertured plate 91 in response to outward movement of the angled supports 114, to form a gap between the upper and lower bent glass sheets to the vertically extending space at the assembly station 42. Simultaneously, the rack 130 has caused the vacuum mold 131 to rotate a considerable portion of 180 degrees of rotation.

By the time the next portion of the assembly cycle has occurred, the piston cylinder 98 has lifted the plate 91 with vacuum continuing on the upper vacuum cups 90 and the lower vacuum cups 63 and 62 support the lower glass sheet in position above the cross conveyor 40 and continue to apply vacuum to the lower glass sheet. The lifting of the upper glass sheet by the lifting of the plate 91 and the maintenance of vacuum through the vacuum cups 90 causes a widening gap to develop. In the meantime, the rack 130 has move to complete the pivoting of the vacuum mold 131 into a rotational position where its elevational configuration is now of the same concave elevation as the concave elevational configuration of the bent glass sheet pair.

The piston rod 49 maintains the table 46 in the fixed intermediate position. When the rack has completed its movement to pivot the vacuum mold 180 degrees and the piston of piston cylinder 98 has moved the plate 91 upwardly to its upward position, the rod from piston 122 becomes free to extend. Actuation of the piston of piston cylinder 122 moves the vacuum mold 131 into the gap between the upper and lower bent glass sheets and into vertical alignment over the lower bent, aligned glass sheet 12 in the vertically extending space that intersects the assembly position at the assembly station 42. During the time that the vacuum mold 131 is moving into the gap, its pivoting has been completed.

The actuation of the piston 122 continues until the vacuum mold 131 supporting the unwrinkled flexible sheet 14 of interlayer material by vacuum on its under surface is aligned between the upper glass sheet supported by vacuum by the upper vacuum cups 90 and the lower glass sheet supported by vacuum by the lower vacuum cups 62 and 63.

While the specific embodiment of this invention maintains the upper bent glass sheet in vertical alignment with the lower bent glass sheet when the bent glass sheets are separated for the introduction of the sheet of flexible interlayer material into a position of alignment over the lower bent glass sheet, and it is most convenient to design the assembly station in this manner, the position of separation for the upper bent glass sheet can be any position that provides sufficient gap to insert the sheet of flexible interlayer material and its supporting vacuum mold into a position of alignment with said lower bent glass sheet to transfer said sheet of flexible interlayer material from said vacuum mold to said lower bent glass sheet to form a bent subassembly as long as the apparatus is capable of returning the upper bent glass sheet to a position of alignment with said lower bend glass sheet after the sheet of flexible interlayer material is deposited thereon.

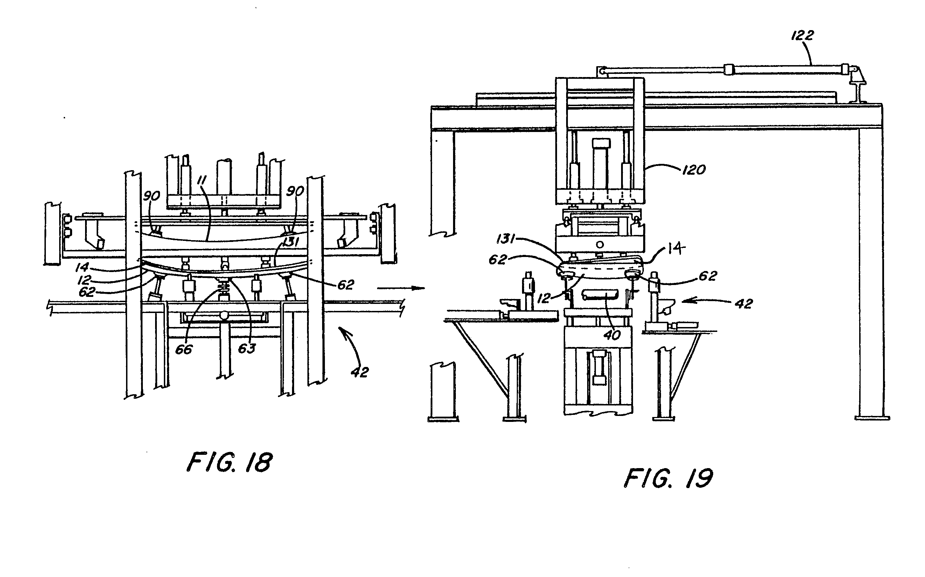

As stated previously, the springs 66 bias the lower central vacuum cups 63 slightly above the mean datum plane of the curvature of the lower bent glass sheet 12 to bias the lower glass sheet slightly upward in its central portion. The interlayer sheet 14, supported on the vacuum mold 131, arrives at the vertically extending space in slightly spaced relation above the lower glass sheet 12 of the bent glass sheet pair and the bottom surface of the upper bent glass sheet 11 of the pair. The state of the apparatus elements at this moment is depicted in Figs. 18 and 19.

As soon as the vacuum mold 131 arrives at the assembly station 42, the piston from piston housing 141, which has been recessed throughout the previous steps of the cycle, is extended to lower the vacuum mold 131 while the latter supports the flexible sheet 14 of interlayer material thereon by vacuum against its lower apertured wall 133 which is now concavely curved in elevation. The latter now moves downward to apply the unwrinkled flexible inter-layer sheet 14 against the top surface of the lower glass sheet 12. The alignment pins 145 insure that the vacuum mold 131 remains in alignment with the vertically extending space as it lowers toward the lower glass sheet. The stroke of the piston from piston housing 141 is closely controlled to insure that the sheet of flexible interlayer material engages the top surface of the lower bent glass sheet 12 but is not so long as to develop a fracturing stress in the lower bent glass sheet 12.

Because of the spring biasing of the central lower vacuum cups 63 against the central portion of the lower bent glass sheet, the flexible sheet 14 of interlayer material makes initial contact in the central portion of the lower glass sheet that is supported by the biased vacuum cups 63 and as the vacuum mold 131 continues to lower against the top surface of the lower glass sheet, the area of contact between the flexible interlayer sheet, still supported by vacuum against the lower convexly curved apertured wall 133 of the vacuum mold 131, gradually increases toward the longitudinal end edges of the lower glass sheet 12. This causes any fluid, such as air, to be forced out toward the end edges of the glass as the flexible sheet 14 increases its area of engagement with the top surface of the lower glass sheet 12. Since the glass sheet has considerable residual heat from the bending operation, the interlayer sheet, on making contact with the glass, softens and becomes tacky as it contacts the glass sheet. This tackiness resists relative sliding between the contacted sheets. A subassembly forms comprising an upper sheet of flexible interlayer material and the lower glass sheet with its concavely curved surface facing upward.

As soon as the interlayer sheet 14 makes complete engagement throughout the entire extent of the lower glass sheet, vacuum is discontinued into the vacuum mold 131 to insure that the interlayer sheet 14 separates from shaped apertured wall 133. To further insure this separation, a blast of perssurized air is applied through the supply nozzle 147 to the mold 131 and thence through apertures 134 by a suitable valve switching from a source of vacuum to a source of pressurized air (not shown) in a manner well known in the art. Alternately, a separate source of pressurized fluid may be connected to the mold 131 for initiation simultaneously with or shortly after the vacuum is discontinued.

Immediately thereafter and while the mold 131 is still pressurized, the piston within piston housing 141 is retracted, the alignment pins 145 insuring that the vacuum mold 131 moves vertically upward in exactly the opposite direction from the one in which it approached the lower glass sheet 12. Pressure on the mold 131 is discontinued. The apertured plate 91 supports the upper vacuum cups 90 with vacuum still applied thereto in the same upward position as before to hold the upper bent glass sheet 11 in spaced relation to provide the gap through which the vacuum mold 131 entered the vertically extending space defined by the spaced bent glass sheets. As soon as the vacuum mold is separated from the sheet of flexible interlayer material forming part of the subassembly that has just been formed, the vacuum mold 131 supported from carriage 120 is ready to return to its original position.

The clevis 123 attached to the piston rod extending from the piston cylinder 122 actuates movement of the carriage 120, carrying with it the vacuum mold 131 denuded of the interlayer sheet 14. As soon as the vacuum mold is clear of the vertically extending space within the assembly station 42, the piston extending from piston cylinder 98 is actuated to begin to move downward to lower the upper glass sheet 11 toward the subassembly 12, 14. Also, as soon as the vacuum mold 131 clears the assembly station 42, rack 130 is actuated to cause pinion 129 to rotate in a clockwise direction to begin to return the vacuum mold 131 to its initial orientation of convex elevation. At this portion of the cycle of operation, subatmospheric pressures are still applied to the vacuum cups 62, 63 and 90 to maintain the glass sheets in separated vertical alignment with one another within said vertically extending space at this stage of the assembly cycle.

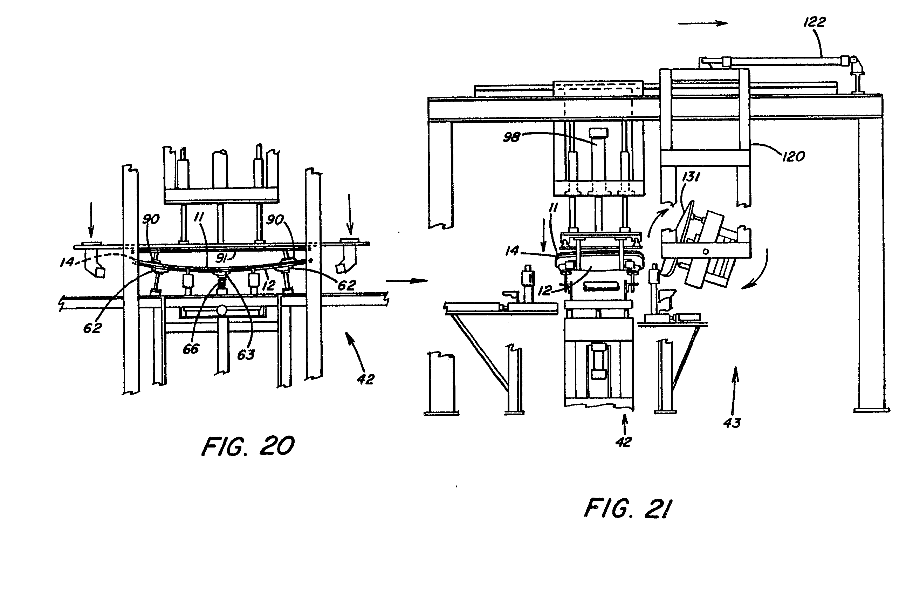

With the gap now cleared of the vacuum mold 131, the apertured plate 91 is lowered, thereby lowering the upper bent glass sheet 11 into contact with the upper surface of the interlayer sheet 14 that forms the upper surface of the subassembly of interlayer sheet 14 tacked to the lower bent glass sheet 12. Since the central lower vacuum cups 63 are still spring loaded, and the upper glass sheet 11 has its normal shape, it makes initial contact with the central portion of the flexible interlayer sheet 14 while still hot enough to make the upper surface of interlayer sheet 14 tacky on engagement therewith. As with the lower bent glass sheet 12, the upper bent glass sheet 11 gradually increases the area of engagement with the flexible interlayer sheet 14 in the longitudinally outward directions from the central portion. This arrangement forces any air or other fluids that would otherwise be entrapped between the top surface of the flexible interlayer sheet 14 and the bottom surface of the upper glass sheet 11 to be forced out beyond the margin of the sandwich that results. This situation is depicted in Fig. 20.

At the same time, rack 130 continues to move causing pinion gear 129 to rotate. As a result, the vacuum mold 131 also rotates further toward its initial orientation of convex elevation as shown in Fig. 21.

Once the sandwich of two glass sheets and the plastic interlayer has been assembled, the vacuum is discontinued on the vacuum cups, and fluid pressure applied thereto to help separate the vacuum cups from the adjacent bent glass sheet surfaces of the assembly. At this time, with no vacuum applied, the piston rod 49 is lowered to lower the table 46 and the lower vacuum cups 62 and 63 and the piston in cylinder 98 is raised to lift the apertured plate 91 and its supported upper set of vacuum cups 90. When the sandwich lowers to the upper level of the rolls of the cross conveyor 40, the sandwich is supported on the rolls of the cross conveyor 40 without changing its orientation or alignment relative thereto.

The apertured plate 91 and its supported upper vacuum cups 90 are in the upward retracted position to provide clearance for the sandwich to leave the assembly station 42. The table 46 is lowered until all the lower vacuum cups 62 and the spring biased vacuum cups 63 are just below the level of the cross conveyor 40. Thus, the resulting sandwich is ready to move in proper alignment along the cross conveyor 40 from the assembly station 42 toward the roll pressing apparatus 44. The assembly station 42 will then be clear for another bent glass sheet pair to arrive for an assembly treatment similar to the one just described.

While the sandwich and the various structural elements of the assembly station assume the latter positions, the rack 130 has completed its return movement so that the vacuum mold 131 has resumed its original orientation of convex elevational configuration. Applying the vacuum again to the vacuum mold 131 after loading another interlayer sheet 14 on the convexly oriented apertured wall 133 permits an operator to support the flexible interlayer sheet against the vacuum mold 131 in unwrinkled condition so that the interlayer sheet is now ready for assembly between the next bent glass sheet pair that arrives at the assembly station.

Two benefits are derived from the present inventions. One is the saving of energy that results from using the residual heat in the glass sheets to make the interlayer sheet tacky during assembly. Manual handling of the glass sheets is eliminated entirely so that it is unnecessary to cool the bent glass sheets sufficiently to enable operators to handle the glass without undue harm. The other benefit is that automatic assembly apparatus makes it possible to assemble the bent glass sheets in exact alignment with the flexible interlayer sheet, and to have each successive sandwich produced in response to exactly the same sequence of movements of alignment means, vacuum cups and vacuum mold to insure more precise alignment from sandwich to sandwich then is possible from a manual assembly operation.

While the temperatures described herein may vary from pattern to pattern, depending upon the severity of bend imparted to the bent glass sheet pair, in a typical operation, a typical temperature range for the glass sheet pair on entering the assembly station is on the order of (275 to 302°F) 135 to 150°C, so that the temperature of the top glass sheet 11 is no colder than about (200°F) 93°C, preferably at least (248°F) 120°C, when it engages the upper surface of the interlayer sheet 14 during the assembly operation. Of course, the temperature of the lower bent glass sheet 12 when it engages the flexible interlayer sheet is no colder than the plastic engaging temperature of the upper bent glass sheet so that the flexible interlayer sheet becomes tacky on both surfaces due to its engagement with the relatively hot glass sheets. This tackiness is sufficient to prevent sliding of the interlayer sheet relative to the opposite glass sheets on engagement therewith.

The temperature of the sandwich at the end of the assembly process should be sufficiently high to permit the sandwich to be conveyed through at least one pair of prepressing rolls and then be edge sealed at a minimum temperature of approximately (200°F) 93°C. While it may be possible to reheat the edge of the sandwich after prepressing to facilitate edge sealing, it is preferred to avoid the need for such reheating. Cooling experiments conducted at a teperature of (74°F) 24°C using pairs of bent glass sheets, each sheet having a nominal thickness of (90 mils) 2.3 millimeters disclosed an average cooling time of 4 minutes 44 seconds for a pair of sheets to cool from (300°F) 149°C to (200°F) 93°C when the sheets were nested and an average cooling time of 2 minutes 19 seconds for single bent sheets of such thickness. Pairs of nested bent glass sheets of this nominal thickness cooled from (275°F) 135°C to (200°F) 93°C in 3 minutes 40 seconds and single bent glass sheets cooled in an average cooling time of 1 minute 49 seconds. These averages were based on 5 readings per experiment (nested sheets versus single sheets) at each temperature range. The assembly apparatus described herein completed the assembly process in 35 seconds from the moment of arrival.

While several minutes are available for prepressing and sealing the edge of a bent glass sheet sandwich assembled at the assembly station, it is prudent to complete the prepressing step as soon as possible after completing the assembly operation.

Many factors contribute to obtaining acceptable sandwiches of bent glass sheets and a flexible interlayer sheet. The side edge alignment rolls 80 and 89 and the linear and edge alignment rolls 115 are mounted on generally vertically oriented guide rolls and rise with the bent glass sheet pair to maintain alignment of the bent glass sheet pair until the vacuum cups engage the bent upper and lower glass sheets by vacuum. The limit rotating rolls 115 which comprise the end edge alignment means provide end edge engagement for shaped glass sheets by moving longitudinally to facilitate longitudinal alignment of the bent glass sheet pair relative to the assembly station. The pivotal amounting adjustment of the end edge engaging rolls in pairs about common axes enables the pairs to move in unison to align and orient each end edge of the bent glass sheets regardless of whether they extend obliquely or normal to the length of the sheets. The use of a set of upper vacuum cups to engage the top surface of the upper glass sheet and a set of lower vacuum cups to engage the bottom surface of the lower glass sheet after the bent glass sheet pair are oriented and aligned by the edge engaging rolls maintains the bent glass sheets in vertical alignment with the vertically extending space containing the alignment position and permits the separation of the bent glass sheets from one another in exact alignment during the insertion of the flexible interlayer sheet supported by the vacuum mold and released from vacuum support to deposit the flexible interlayer sheet in proper alignment and orientation on the lower bent glass sheet to form a subassembly which becomes a sandwich when the upper bent glass sheet is mounted over the flexible interlayer sheet of the subassembly.

The use of a shaped rotatable vacuum mold having curved walls conforming in shape to that of the bent glass sheets with means to move said vacuum mold from a convex elevational configuration at the mold loading station to a concave elevational configuration at the assembly station enables an operator to load a flexible interlayer sheet on the mold at said mold loading station in positions to locate the bent glass sheet pair to receive said pivoted flexible interlayer sheet onto a shaped glass sheet of concave elevation at said assembly station in proper orientation and alignment without wrinkling the flexible interlayer sheet.

The use of spring biased vacuum cups facing the central portion of the lower glass sheet provides an upward bias that temporarily distorts the lower bent glass sheet upwardly when the flexible interlayer sheet is applied thereto and temporarily distorts the subassembly when the upper bent glass sheet is lowered thereagainst. These temporary distortions help remove entrapped air and other fluids from the interfacial surface of adjacent sheets of the sandwich.

The various features all assist in making possible the automatic assembly of a bent glass-plastic sandwich from a pair of bent glass sheets that separates the bent glass sheets, applies the flexible interlayer sheet against one of the bent glass sheets to form a subassembly and applies the other bent glass sheet to the exposed surface of the interlayer sheet before the residual heat in the glass sheets that developed during their bending is dissipated to the extent that the glass sheet become too cold on engaging the interlayer sheet to make the interlayer sheet tacky. Providing assembly apparatus that completes the transfer and assembly in 35 seconds or less insures this desired result.

While the specific embodiment described relates to assembling a sandwich comprising a pair of bent glass sheets of conforming configuration with a sheet of flexible interlayer material therebetween, and a subassembly of a single bent glass sheet and a sheet of flexible interlayer material is assembled during the assembly of said sandwich, it is understood that the present invention also comprehends that the subassembly may be the resulting product desired. Such a subassembly may be fabricated into a bilayer windshield, particularly when the flexible interlayer material is composed of polyurethane.

It is also within the gist of this invention to orient the bent glass sheet pair and the vacuum mold to have their longitudinal dimensions extend transverse to the path defined by the cross conveyor. It is also within the gist of this invention to have the conveyor that connects the bonding mold unloading station at the bending lehr exit with the assembly station to extend as a longitudinal continuation of the conveyor through the bending lehr instead of extending transversely of the bending lehr conveyor as in the illustrative embodiment.

The illustrative embodiment also includes a device to transfer a vacuum mold from a vacuum mold loading station to the assembly station. It is also convenient for loading the vacuum mold with a flexible sheet of interlayer material to orient the mold to have a convex elevational configuration to facilitate loading a flexible sheet of interlayer material in unwrinkled condition thereon and to pivot the mold into a concave elevational configuration conforming to that at which the bent glass sheets are supported for assembly. While it is more convenient and simpler to pivot the vacuum mold about a single axis as depicted in the illustrative embodiment, it is also within the gist of this development to orient the vacuum mold about a vertical axis as well as a horizontal axis to bring the vacuum mold into alignment with one or more bent glass sheets supported with their length extending transverse to the conveyor path, instead of longitudinally of the path as in the illustrative embodiment.

The illustrative embodiment of assembly apparatus described herein is capable of aligning and assembling a family of windshield patterns having a range of sizes (lengths and widths), various outlines including obliquely extending end edges at a range of oblique angles within certain limits, various depths of bend and various angles of bend wherein the tangent at the longitudinal end of the sandwich assembled makes an angle with the tangent to the main portion of the sandwich that varies within certain limits. The illustrative embodiment is also capable of aligning and assembling sandwiches having asymmetrical shapes with respect to either their longitudinal axis, their transverse axis or both of these axes.

The form of the invention shown and described in this disclosure represents an illustrative preferred embodiment of apparatus containing the present invention and several variations thereof. It is also understood that various changes may be made. For example, the specific preferred embodiment describes an assembly operation in which bent glass sheets are oriented in an essentially horizontal orientation to have a concave elevational configuration during assembly of the sandwich. It is apparent that oblique and vertical orientations may be maintained by edge alignment means cooperating with opposed sets of vacuum cups used in cooperation with a shaped vacuum mold having an elevational configuration conforming to those of the conforming glass sheets with means to move the mold from a mold loading station to an assembly station where the mold assumes the orientation of support for the bent glass sheets.

## Claims

1. A method of assembling bent glass sheets of desired shapes and sheets of flexible interlayer material (14) for lamination into a bent transparent laminated window by supporting the bent glass sheets at an assembly station, supporting a sheet of flexible interlayer material (14) against a wall conforming to the shape of the bent glass sheets, moving a sheet of flexible interlayer material (14) into alignment with a surface of a bent glass sheet (11), engaging said aligned sheets and removing said aligned sheets from said assembly station, characterized by engaging the sheet of flexible interlayer material (14) with the bent glass sheet (11) before the conclusion of a time interval sufficient to cool said bent glass sheet from the temperature at which said glass sheets are bent to a temperature below that at which the sheet of flexible interlayer material develops sufficient tackiness to resist sliding relative to the bent glass sheets on engagement therewith.

2. The method of claim 1, characterized by engaging the sheet of flexible interlayer material with a second bent glass sheet (12) of conforming shape after supporting a pair of bent glass sheets in alignment at said assembly station, supporting said sheet of flexible interlayer material against a wall having a shape conforming to that of said bent glass sheets to conform to said conforming shape.

3. The method as in claim 1 or 2, characterized in that said glass sheet or sheets engages or engage said sheet of flexible interlayer material at a temperature not below 200°F (93°C).

4. The method as in claim 2, characterized by supporting said bent glass sheets from a bending area into a vertically extending space within said assembly station as a stack comprising an upper bent glass sheet (11) and a lower bent glass sheet (12) oriented in an essentially horizontal arrangement, supporting said bent glass sheets by translating the upper sheet vertically from said lower sheet while maintaining said bent glass sheets in vertical alignment within said vertically extending space, applying said sheet of flexible interlayer material (14) to the top surface of said bent lower glass sheet forming a subassembly, and engaging said upper glass sheet against the top surface of said sheet of flexible interlayer material to convert said subassembly to a sandwich before the conclusion of said time interval.

5. The method as in claim 1 or 2, characterized by supporting said sheet of flexible interlayer material by vacuum on a vacuum mold (131), and releasing said sheet of flexible interlayer material from said vacuum when the latter is aligned with said lower bent glass sheet.

6. The method as in claim 5, characterized by pressurizing said vacuum mold when said vacuum is released.

7. The method as in claim 1 or 2, characterized by the time elapsed for conveying said bent glass sheets from said bending area and for assembling said sandwich not exceeding 35 seconds.

8. The method as in any one of claims 1 to 7, characterized by supporting said bent glass sheet at spaced areas along its curved surface on flexible support members (62, 63) disposed in a curved surface conforming generally to said desired shape and movable in unison toward and away from the curved surface of the bent glass sheet, aligning at least one of said flexible support members to face the central portion of a major surface of said bent glass sheet opposite said concave surface, biasing said at least one of said flexible support members toward said central portion, thereby temporarily biasing the central portion of said bent glass sheet toward said supporting surface and bringing said sheets together to first engage the central portion of said supported flexible sheet with said bent glass sheet and to gradually increase the area of engagement from said central portion to the edge of said sheets to force air and other vapors from the interfacial surface between said bent glass sheet and said flexible sheet of interlayer material as the area of engagement between said flexible sheet and said bent glass sheet increases outward toward the edge of said sheets, thereby reducing said central portion bias to form a subassembly of said flexible sheet of interlayer material and said bent glass sheet and separating said supporting surface form said flexible sheet of interlayer material when said subassembly is formed.

9. The method of claim 8, characterized by using one bent glass sheet of conforming configuration for assembly with said flexible sheet of interlayer material, resuming the bias on said bent glass sheet when said supporting surface is removed to bias said subassembly in its central portion, and applying a major surface of the other of said pair of bent glass sheets that is convexly curved against the central portion of said flexible sheet of interlayer material of said subassembly to contact said flexible sheet of interlayer material at its central portion with said other bent glass sheet of said pair and to gradually increase the area of contact of said other bent glass sheet of said pair with said flexible sheet of interlayer material from said central portion to said edge to force air and other vapors from the interfacial surface between said other bent glass sheet and said flexible sheet of interlayer material to convert said subassembly to a sandwich.

10. The method of claim 9, characterized by separating said bent glass sheets while maintaining their alignment to provide a gap therebetween, moving said sheet of flexible interlayer material into alignment between said bent glass sheets while supported against a supporting surface conforming to said shape to bring a surface of said flexible sheet into alignment with a concave surface of one of said bent glass sheets facing said gap, moving said flexible sheet of interlayer material into aligned contact with said concave surface, and removing said supporting surface, closing said gap to bring a convex surface of the other of said bent glass sheets into engagement with the opposite surface of said flexible sheet of interlayer material before said bent glass sheets cool from the temperature at which said glass sheets are bent to a temperature below which the sheet of flexible interlayer material develops sufficient tackiness to resist sliding relative to the bent glass sheets on contact therewith.

11. The method as in claim 10, characterized in that said bent glass sheets are supported in a generally horizontal plane and are oriented to have a concave elevational configuration, suction is applied to hold said flexible sheet of interlayer material against said shaped supporting surface, and said shaped supporting surface is oriented to have a concave elevational configuration prior to applying said flexible sheet of interlayer material against said partially biased bent glass sheet.

12. The method according to claim 11, characterized in that vacuum is applied to said flexible support members to hold one of said bent glass sheets against a first set of said flexible support members and to hold the other of said bent glass sheets against a second set of said flexible support members.

13. A method as in any of claims 1 to 12, characterized by holding said sheet of flexible interlayer material preparatory to assembling said sheet against a bent glass sheet oriented to have a concave elevational configuration supporting said sheet of flexible interlayer material on said mold having said first wall whose shape conforms to said configuration while said mold is oriented so that said first wall has a convex configuration in elevation, drawing vacuum through said first wall to support said sheet of flexible interlayer material thereagainst, changing the orientation of said mold to change the orientation of said first wall so that the latter has a concave elevational configuration while continuing to draw vacuum through said first wall to maintain said sheet of flexible interlayer material thereagainst in a shape conforming to said configuration, and moving said mold into alignment with said bent glass sheet while supporting said sheet of flexible interlayer material thereagainst properatory to transfer of said flexible sheet from said first wall of said mold to said bent glass sheet.

14. The method as in claim 13, characterized by supporting said pair of aligned bent glass sheets in nesting relation to one another in said concave elevational configuration to have said pair include an upper bent glass sheet and a lower bent glass sheet, further including separating said bent glass sheets from one another to form a gap between said bent glass sheets prior to moving said mold into alignment with said lower bent glass sheet while supporting said flexible sheet of interlayer material thereagainst and engaging said lower bent glass sheet with said sheet of flexible interlayer material to tack said flexible sheet of interlayer material against said lower bent glass sheet to form a subassembly.

15. The method as in claim 14, characterized by removing said mold from a gap between said upper glass sheet and said subassembly, and bringing the upper bent glass sheet into engagement with said sheet of flexible interlayer material to tack the latter against said upper bent glass sheet and convert said subassembly to a sandwich.

16. The method of claim 4, characterized by supporting said pair of bent glass sheets on a support, engaging each of the opposite longitudinal end edge surfaces of said bent glass sheets at transversely spaced portions to align said glass sheets longitudinally of an assembly station, engaging each of the opposite side edges of said sheets at longitudially spaced portions to align said glass sheets transversely of said assembly station, disengaging with said longitudinal end edge portions, lifting said bent glass sheets in unison from said support while maintaining engagement with said opposite side edge portions, engaging the top surface of the upper bent glass sheet of said pair, disengaging said side edge portions, separating said pair of bent glass sheets in such a direction as to form a gap between said engaged glass sheets at said assembly station, inserting a sheet of flexible interlayer material (14) into said gap into a position of alignment over said lower bent glass sheet (12), engaging said sheet of flexible interlayer material against the upper surface of said lower bent glass sheet while supporting said sheet of flexible interlayer material in a configuration conforming to the configuration of said bent glass sheets in alignment with said lower bent glass sheet, disengaging said support of said sheet of flexible interlayer material to form a subassembly (12, 14) of said lower bent glass sheet and said sheet of flexible interlayer material, and moving said upper bent glass sheet (11) into alignment with said subassembly (12, 14) to engage the bottom surface of said upper glass sheet against the top surface of said sheet of flexible interlayer material (14) to convert said subassembly (14, 12) to a sandwich (11, 14, 12) comprising said pair of bent glass sheets and said sheet of flexible interlayer material.

17. The method as in claim 16, characterized by retaining said upper and lower bent glass sheets (11, 12) in alignment with one another during their separation.

18. Apparatus for assembling bent glass sheets (11) and sheets (14) of flexible interlayer material comprising (a) an exit station (32) for removing the bent glass sheets (11) while hot from a glass sheet bending lehr (30), and (b) an assembly station (42), characterized in that a short conveyor (40) is arranged between said exit station (32) and said asembly station (42) for transferring a bent glass sheet (11), rolls (80, 89, 115) are provided in said assembly station (42) to move into engagement with said bent glass sheet (11) to orient and align said bent glass sheet (11) at an assembly position at said assembly station (42), a first set of vacuum cups (62, 63) is arranged to one side of said assembly position for movement relative to said assembly position and engageable with said bent glass sheet (11), a vacuum mold (131) having an apertured wall (133) shaped to conform to the shape of said bent glass sheet (11) is movable and pivotably supportable for movement between a loading station (43) and said assembly station (42), said vacuum mold (131) is supportable at said loading station (43) in an orientation convenient to load said flexible interlayer sheet (14) against said apertured wall (133) and is rotatable into a differnt orientation conforming to the configuration of said bent glass sheet at said assembly station (42), a reversely movable carriage (120) is provided to transfer said vacuum mold (131) from said loading station (43) to said assembly station (42), said vacuum mold (131) is arranged to move into a position at said assembly station (42) where said loaded flexible interlayer sheet (14) is aligned with said bent glass sheet (11) to transfer said flexible interlayer sheet (14) onto a surface of said bent glass sheet (11), said movable carriage (120) is returnable to said loading station (43), and said conveyor (40) is provided with an extension for removing said subassembly (11, 14) from said assembly station (42).

19. Apparatus as in claim 18, characterized in that said short conveyor (40) is arranged between said exit station (32) and said assembly station (42) for transferring a pair of bent glass sheets (11, 12) of conforming configuration, said rolls (80, 89, 115) are provided in said assembly station (42) to move into engagement with said pair of bent glass sheets (11, 12) to orient and align said pair of bent glass sheets (11, 12) at an assembly position within said assembly station (42), a second set of vacuum cups (90) is provided on the side of said assembly position opposite of said first set of vacuum cups (62, 63) and engageable with the second glass sheet (12), both sets of vacuum cups (62, 63, 90) are arranged to be movable relative to said assembly position to separate said bent glass sheets (11, 12) at said assembly position to form a gap therebetween, said vacuum mold (131) is rotatable into a different orientation conforming to the configuration of said pair of glass sheets (11, 12) at said assembly station (43), said reversely movable carriage (120) transfers said vacuum mold (131) into said assembly station (42) into a position in said gap between the separated bent glass sheets (11, 12), said vacuum mold (131) is arranged to move into a position at said assembly station (42) in the gap where said loaded flexible interlayer sheet (14) is aligned with one of said bent glass sheets (11, 12) to transfer said flexible interlayer sheet (14) onto a surface of one of the glass sheets (11, 12), the second set of vacuum cups (90) being movable within said assembly station (42) into a position for depositing the second of said pair of bent glass sheets (11, 12) onto said flexible interlayer sheet (74) to convert the subassembly (11, 14) of glass sheet and flexible interlayers into a sandwich (11, 14, 12) after said carriage (120) leaves said assembly station (42), and said conveyor (40) is provided with an extension for removing said sandwich (11, 14, 12) from said assembly station (42).

20. Apparatus as in claims 18 to 19, characterized in that said vacuum mold (131) is capable of selective coupling to a source of vacuum or to a source of pressurized fluid.

21. Apparatus as in claims 18 to 19, characterized in that said conveyor (40) extends along a horizontal path from said exit station (32) to said assembly station (42).

22. Apparatus of claim 18, characterized in that the conveyor (40) is provided to support the lower glass sheet (11) and an upper bent glass sheet (12) supported on said lower glass sheet (11), and said gap is located within a vertically extending space at said assembly station (42) that intersects said conveyor (40).

23. Apparatus as in claim 19, characterized in that said first set of vacuum cups (62, 63) is adaptable to engage a convex surface of one of said bent glass sheets (11), said second set of vacuum cups (90) is adaptable to engage a concave surface of the other of said bent glass sheets (12), said set of vacuum cups (62, 63, 90) adapted to face said pair of bent glass sheets (11, 12) when the latter are in said assembly position, said second set of vacuum cups constructed and arranged for movement transverse to said conveyor (40) on one side only of said conveyor, said first set of vacuum cups constructed and arranged for movement transverse to said conveyor (40) from one side to the other side of said conveyor, said sets of vacuum cups (62, 63, 90) being mounted along curved surfaces conforming generally to the shape of said bent glass sheets (11, 12), a spring (66) biasing at least one vacuum cup in the central portion of said first set (62, 63) for limited movement transverse to the curved surface occupied by said first set to bias said one of said glass sheets (11) in its central portion facing said vacuum cup when said mold moves with said flexible sheet of interlayer material toward said one of said glass sheets while maintaining said predetermined alignment, whereby said flexible sheet (14) of interlayer material engages said one of said bent glass sheets while supported by said mold (131) in a concave elevational configuration first at said central portion and then along an area of increasing size from said central portion to the edge of said engaging sheets (11, 14) to force air and other vapors from the interfacial surface between said glass sheet (11) and said flexible sheet (14) of interlayer material to form a subassembly (11, 14) of said flexible sheet of interlayer material and said bent glass sheet.

24. Apparatus as in claim 23, characterized in that said conveyor (40) comprises spaced conveyor rolls defining a path of movement in an essentially horizontal plane, said second set of vacuum cups (90) is located above said conveyor (40) and said first set of vacuum cups (62, 63) is mounted for vertical movement in unison between recessed positions below said conveyor (40) along vertical paths that intersect spaces between certain adjacent rolls of said conveyor.

25. Apparatus as in claim 24, characterized in that said second set (90) comprises vacuum cups (90) rigidly mounted for movement in unison and located to engage the top surface of said upper bent glass sheet (12) on each side of the central portion thereof and said first set comprises vacuum cups (62) rigidly mounted and movable in unison to engage the bottom surface of said lower glass sheet on each side of the central portion thereof and at least one additional vacuum cup (63) for said first set biased upward to face and to temporarily bias upwardly the central portion of said lower glass sheet.

26. Apparatus as in claim 23, characterized in that said first and second sets of vacuum cups (62, 63, 90) are relatively movable into positions close together to engage the central portion of said second glass sheet (12) with the central portion of said flexible sheet (14) of interlayer material of said subassembly (11, 14).

27. Apparatus as in claim 24, characterized in that said mold (131) is removable from said assembly station while said sets of vacuum cups (62, 63, 90) are separated and said first and second sets of vacuum cups (62, 63, 90) are relatively movable into positions together to engage the central portion of the bottom convex surface of said supper bent glass sheet (12) with the central portion of the top surface of said flexible sheet (14) of interlayer material of said subassembly (11, 14).

28. Apparatus as in claim 18, further characterized in that said vacuum mold (131) has a first wall (133) having a curved configuration conforming to the elevational configuration of said bent glass sheets (11, 12) a second wall (135) of similar curved configuration having an aperture adaptable for coupling to a vacuum source, a plurality of spacer elements (137) of uniform thickness distributed throughout the extent of said walls and separating said walls, a peripheral spacer wall (136) of rigid, curved, frame-like configuration enclosing the space between said walls of curved configuration, said first wall having a plurality of apertures (134) distributed throughout its extent.

29. Apparatus as in claim 28, characterized in that said aperture in said second wall is adaptable to be selectively coupled to said vacuum source or to a source of pressurized fluid.

30. Apparatus as in claim 28, characterized in that said second wall (135) is apertured with a plurality of apertures, at least one of which is adaptable to be selectively coupled to said vacuum source and at least one other of which is adaptable to be selectively coupled to said source of pressurized fluid.

31. Apparatus of claim 28, characterized in that said carriage (120) pivotally supports said mold relative to said carriage for movement between a first orientation wherein said first wall has an upwardly facing convex elevational configuration and a second orientation wherein said first wall has a downwardly facing concave elevational configuration.

32. Apparatus of claims 28 to 31, characterized in that said curved walls (133, 135) of the mold are made of thin sheet metal and said spacer elements (137) are made of a flexible material.

33. Apparatus of claim 32 characterized in that said flexible material is a rubber having a Shore A durometer of approximately 40 to approximately 55.

34. Apparatus as in claim 24, characterized in that said rolls (80, 89, 115) for aligning said pair of bent glass sheets (11, 12) comprise a pair of linear rotating rolls (115) at each longitudinal end, each mounted for free rotation about an obliquely extending axis, the angle of obliquity of said obliquely extending axes approximating the mean orientation of the end edge surfaces of a bent glass sheet, a pivot pin (110) for each pair of linear rotating rolls (115), said pair of linear rotating rolls is supportable for pivotable adjustment to unison relative to its associated pivot pin to bring the linear rotating rolls (115) of each pair into fixed positions of alignment with transversely extending portions of one or the other corresponding longitudinal end edge of said pair of bent glass sheets (11, 12), said linear rotating rolls being supportable in positions intersecting said higher elevation and having sufficient vertical dimensions to intercept transversely spaced portions of the longitudinal end edges of bent glass sheets (11, 12), said pairs of linear rotating rolls are movable in opposite longitudinal directions between positions of relatively greater longitudinal spacing separated from one another at said higher elevation by distances greater than the longitudinal distances between corresponding longitudinal end edge portions of said bent glass sheets (11, 12).

35. Apparatus as in claim 34, characterized in that said pair of side edge alignment rolls (80, 89) is mounted along each side of said assembly station, at least one of said pairs of said side edge alignment rolls is movable in a transverse direction between transversely spaced positions separated from one another by distance greater than the width of bent glass sheets (11, 12) and glass side edge portion engaging positions wherein the side edge alignment rolls (80, 89) of each pair are transversely spaced from corresponding side edge alignment rolls (89, 90) of said other pair by a transverse distance approximately equal to the transverse distance between side edge portions engaged by corresponding side edge engaging rolls of said pairs.

36. Apparatus as in claim 35, characterized in that the other of said pairs of side edge alignment rolls (89, 90) is movable in a transverse direction opposite to the transverse direction of movement for said one of said pairs of side edge alignment rolls (80, 89).

37. Apparatus as in claim 35 or claim 36, characterized in that a vertical shaft (78, 87) is provided for each of said side edge alignment rolls (80, 89), wherein each of said side edge alignment rolls (80, 89) is mounted on a different one of said shafts (78, 87) for slidable vertical movement upwardly in response to upward movement of said bent glass sheets (11, 12) for slidable downward vertical movement, and stop means for supporting said side edge alignment rolls (80, 89) in positions obtained by said slidable downward vertical movement that is aligned with said horizontal support.

38. Apparatus as in claim 37, characterized in that said horizontal support comprises said conveyor (40) comprising longitudinally spaced conveyor rolls, said first set of vacuum cups (62, 63) are movable vertically between certain adjacent of said conveyor rolls for lifting the bottom surface of said lower bent glass sheet (11) from said conveyor rolls and said side edge aligning rolls (80, 89) are liftable along said vertical posts in unison with said bent glass sheets (11, 12).

39. Apparatus as in claim 38, characterized in that said first set of vacuum cups is adaptable to engage the bottom surface of the lower bent glass sheet of said pair, said second set of vacuum cups is adaptable to engage the top surface of the upper bent glass sheet of said pair, said sets of vacuum cups are connectible to vacuum source means to apply vacuum to said first and second sets of vacuum cups.

40. Apparatus as in claim 39, characterized in that at least one of said sets of said vacuum cups (62, 63, 90) is movable as a unit relative to the other of said sets of said vacuum cups (62, 63, 90).

41. Apparatus as in claim 40, characterized in that said vacuum mold (131) having an apertured wall (133) having a configuration conforming to the conforming shapes of said bent glass sheets (11, 12) is adaptable for coupling to a source of vacuum whereby said apertured wall is adaptable to support a sheet (14) of flexible interlayer material thereagainst, and said vacuum mold is movable into a position of alignment with said bent lower glass sheet (11).

42. Apparatus as in claim 41, further characterized in that said vacuum mold (131) is removable from said subassembly (11, 14) and said sets of vacuum cups (62, 63, 90) are movable into closer relation to one another to engage said upper glass sheet (12) against said sheet (14) of flexible interlayer material of said subassembly.

43. Use of the apparatus of any of claims 18 to 42 to assemble bent glass sheets with flexible sheets of interlayer material forming bent laminated windows.

## Patentansprüche

1. Verfahren zum Zusammenfügen von zu gewünschten Formen gebogenen Glasscheiben und Folien aus flexiblem Zwischenschichtmaterial (14) zum Laminieren zu einem gebogenen transparenten laminierten Fenster durch Abstützen der gebogenen Glasscheiben in einer Zusammenführstation, Halten einer Folie aus flexiblem Zwischenschichtmaterial (14) an einer Wand, deren Form mit der Form der gebogenen Glasscheiben übereinstimmt, Bewegen einer Folie aus flexiblem Zwischenschichtmaterial (14) in eine mit der Oberfläche der gebogenen Glasscheibe (11) fluchtend übereinstimmende Stellung, in Eingriff bringen der ausgerichteten Folie und Scheibe und Entfernen der in Eingriff stehenden Folie und Scheibe aus der Zusammenführstation, gekennzeichnet durch in Eingriff bringen der Folie aus flexiblem Zwischenschichtmaterial (14) mit der gebogenen Glasscheibe (11) vor dem Ende einer Zeitspanne, die ausreicht, um die gebogene Glasscheibe von der Temperatur, bei der sie gebogen wurde, auf eine Temperatur abzukühlen, die unter der Temperatur liegt, bei der die Folie aus flexiblem Zwischenschichtmaterial ausreichend klebrig wird, um beim Eingriff mit den Glasscheiben einer relativen Verschiebung zueinander zu widerstehen.

2. Verfahren nach Anspruch 1, gekennzeichnet durch in Eingriff bringen der Folie aus flexiblem Zwischenschichtmaterial mit einer zweiten gebogenen Glasscheibe (12) von übereinstimmender Form nach dem Abstützen eines Paares von miteinander fluchtend ausgerichteten Glasscheiben in der Zusammenführstation, Halten der Folie aus flexiblem Zwischenschichtmaterial an einer Wand, deren Form mit der Form der gebogenen Glasscheiben übereinstimmt, um eine Übereinstimmung der Formen herbeizuführen.

3. Verfahren nach Anspruch 1 oder 2, dadurch gekennzeichnet, daß die Glasscheibe oder die Glasscheiben mit der Folie aus flexiblem Zwischenschichtmaterial bei einer Temperatur nicht unterhalb 93°C (200°F) miteinander in Eingriff gebracht werden.

4. Verfahren nach Anspruch 2, gekennzeichnet durch Tragen der gebogenen Glasscheiben als ein sich in einer im wesentlichen horizontalen Lage befindliches Paket einer oberen gebogenen Glasscheibe (11) und einer unteren gebogenen Glasscheibe (12) aus einem Biegebereich in einem sich senkrecht erstreckenden Raum in der Zusammenführstation, Abstützen der gebogenen Glasscheiben, senkrechtes Abheben der oberen Glasscheibe von der unteren Glasscheibe, wobei die untere der gebogenen Glasscheiben unverändert ausgerichtet im sich senkrecht erstreckenden Raum gehalten wird, Aufbringen der Folie aus flexiblem Zwischenschichtmaterial (14) auf die obere Oberfläche der gebogenen unteren Glasscheibe und Ausbilden eines Zwischenlaminats und in Eingriff bringen der oberen Glasscheibe mit der oberen Oberfläche der Folie aus flexiblem Zwischenschichtmaterial, um das Zwischenlaminat vor dem Ende der Zeitspanne in einen Schichtenverbund umzuwandeln.

5. Verfahren nach Anspruch 1 oder 2, gekennzeichnet, durch Halten der Folie aus flexiblem Zwischenschichtmaterial mittels Vakuum an einer Vakuumform (131) und Ablassen der Folie aus flexiblem Zwischenschichtmaterial von Vakuum, wenn die letztere mit der unteren gebogenen Glasscheibe fluchtend ausgerichtet ist.

6. Verfahren nach Anspruch 5, gekennzeichnet durch Beaufschlagen der Vakuumform mit Druck, wenn das Vakuum aufgehoben wird.

7. Verfahren nach Anspruch 1 oder 2, dadurch gekennzeichnet, daß die Zeit für das Überführen der gebogenen Glasscheiben aus dem Biegebereich und für das Zusammenfügen zum Schichtenverbund 35 Sek. nicht übersteigt.

8. Verfahren nach jedem der Ansprüche 1 bis 7, gekennzeichnet durch Abstützen der gebogenen Glasscheibe in Abständen langs ihrer gekrümmten Oberfläche auf flexiblen Traggliedern (62, 63), die in einer mit der gewünschten Form allgemein übereinstimmenden, gekrümmten Fläche angeordnet sind und übereinstimmend zur und von der gekrümmten Oberfläche der gebogenen Glasscheibe weg beweglich ausgebildet sind, Ausrichten mindestens eines der flexiblen Tragglieder, um den der konkaven Oberfläche gegenüberliegenden Zentralteil einer Hauptoberfläche der gebogenen Glasscheibe zu zentrieren, Vorspannen mindestens eines der flexiblen Tragglieder gegen den Zentralteil, so daß dadurch vorübergehend der Zentralteil der gebogenen Glasscheibe gegen die abstützende Oberfläche vorgespannt wird, und Zusammenbringen der Scheiben und Folie, so daß zuerst der Zentralteil der gehaltenen flexiblen Folie mit der gebogenen Glasscheibe in Eingriff kommt und allmähliches Vergrössern der Eingriffsfläche vom Zentralteil zu den Kanten der Folie und Scheibe, um Luft und andere Dämpfe von der Grenzfläche der gebogenen Glasscheibe und dem flexiblen Zwischenschichtmaterial mit dem nach außen zu den Kanten zunehmenden Eingriff zwischen flexibler Folie und gebogener Glasscheibe zu verdrängen, so daß sich die Vorspannung des Zentralteils verringert und sich ein Zwischenlaminat aus der flexiblen Folie des Zwischenschichtmaterials und der gebogenen Glasscheibe bildet und Abheben der haltenden Oberfläche von der flexiblen Folie aus Zwischenschichtmaterial, nachdem das Zwischenlaminat ausgebildet ist.

9. Verfahren nach Anspruch 8, gekennzeichnet durch Verwenden einer übereinstimmend gebogenen Glasscheibe zum Zusammenfugen mit der flexiblen Folie aus Zwischenschichtmaterial, Wideraufnehmen der Vorspannung der gebogenen Glasscheibe, nachdem die haltende Oberfläche abgehoben ist, um den Zentralteil des Zwischenlaminats vorzuspannen und Aufbringen einer gegenüber dem Zentralteil der flexiblen Folie des Zwischenlaminats konvex gekrummten Hauptoberfläche des anderen des Paares der gebogenen Glasscheibe auf das Zwischenlaminat, so daß das Zentralteil der flexiblen Folie aus Zwischenschichtmaterial mit der anderen gebogenen Glasscheibe des Paares in Berührung kommt und allmähliches Vergrossern der Berührungsfläche der anderen gebogenen Glasscheibe des Paares mit der flexiblen Folie aus Zwischenschichtmaterial vom Zentralteil zu den Kanten hin, um Luft und andere Dämpfe von der Grenzfläche zwischen der anderen gebogenen Glasscheibe und der flexiblen Folie aus Zwischenschichtmaterial zu verdrängen und das Zwischenlaminat in einen Schichtenverbund umzuwandeln.

10. Verfahren nach Anspruch 9, gekennzeichnet durch Trennen der gebogenen Glasscheiben unter Aufrechterhalten der fluchtenden Ausrichtung, um einen Zwischenraum zwischen ihnen auszubilden, Bewegen der Folie aus flexiblem Zwischenschichtmaterial in fluchtende Ausrichtung zwischen die gebogenen Glasscheiben, während sie an einer Oberfläche mit übereinstimmender Form gehalten wird, um eine Oberfläche der flexiblen Folie mit der konkaven Oberfläche einer der den Zwischenraum begrenzenden gebogenen Glasscheiben fluchtend auszurichten, Bewegen der flexiblen Folie aus Zwischenschichtmaterial in fluchtend ausgerichteten Kontakt mit der konkaven Oberfläche und Entfernen der haltenden Oberfläche, Schließen des Zwischenraumes, um die konvexe Oberfläche der anderen der gebogenen Glasscheibe in Eingriff mit der gegenüberliegenden Oberfläche der flexiblen Folie aus Zwischenschichtmaterial zu bringen, ehe die gebogenen Glasscheiben von der Temperatur, bei der sie gebogen wurden, auf eine Temperatur abkühlen, die unter der Temperatur liegt, bei der die Folie aus flexiblem Zwischenschichtmaterial ausreichend klebrig wird, um beim Eingriff mit den Glasscheiben einer relativen Verschiebung zueinander zu widerstehen.

11. Verfahren nach Anspruch 10, dadurch gekennzeichnet, daß die gebogenen Glasscheiben in einer im allgemeinen horizontalen Ebene abgestützt und in einer konkav nach oben gewölbten Stellung ausgerichtet sind, daß Saugwirkung ausgeübt wird, um die flexible Folie aus Zwischenschichtmaterial an der geformten Stützfläche zu halten und die geformte Stützfläche so ausgerichtet wird, daß sie eine konkav nach oben gewölbte Stellung einnimmt, ehe die flexible Folie aus Zwischenschichtmaterial aus die teilweise vorgespannte gebogene Glasscheibe aufgebracht wird.

12. Verfahren nach Anspruch 11, dadurch gekennzeichnet, daß Vakuum an die flexiblen Tragglieder angelegt wird, um eine der gebogenen Glasscheiben an einem ersten Satz der flexiblen Tragglieder zu halten und die andere der gebogenen Glasscheiben an einem zweiten Satz der flexiblen Tragglieder zu halten.

13. Verfahren nach jedem der Ansprüche 1 bis 12, gekennzeichnet durch Halten der Folie aus flexiblem Zwischenschichtmaterial vorbereitet zum Zusammenführen der Folie mit einer gebogenen Glasscheibe, die so ausgerichtet ist, daß sie eine konkav nach oben gewölbte Stellung hat, Halten der Folie aus flexiblem Zwischenschichtmaterial an der Form, deren erste Wand in ihrer Form mit der Konfiguration übereinstimmt, wobei die Form so ausgerichtet ist, daß die erste Wand eine konvexe, nach oben gewölbte Stellung hat, Anlegen von Vakuum durch die erste Wand, um die Folie aus flexiblem Zwischenschichtmaterial an der Wand zu halten, Ändern der Orientierung der Form, so daß sich die Stellung der ersten Wand so ändert, daß die letztere eine konkav nach oben gerichtete Stellung hat, wobei das durch die erste Wand angelegte Vakuum aufrechterhalten wird, um die Folie aus flexiblem Zwischenschichtmaterial an ihr in einer mit der Stellung übereinstimmenden Form zu halten und Bewegen der Form in fluchtende Ausrichtung mit der gebogenen Glasscheibe, während die Folie aus Zwischenschichtmaterial an ihr gehalten und der Übergang der flexiblen Folie von der ersten Wand der Form auf die gebogene Glasscheibe vorbereitet ist.

14. Verfahren nach Anspruch 113, gekennzeichnet durch Abstützen des zueinander passenden Paares fluchtend ausgerichteter gebogener Glasscheiben in der konvex nach oben gewölbten Stellung, um das Paar aus oberer gebogener Glasscheibe und unterer gebogener Glasscheibe auszubilden, anschliessendes Trennen der gebogenen Glasscheiben voneinander, um einen Zwischenraum zwischen den gebogenen Glasscheiben zu schaffen, ehe die die flexible Folie aus Zwischenschichtmaterial tragende Form in fluchtend ausgerichtete Stellung mit der unteren gebogenen Glasscheibe bewegt wird und in Eingriff bringen der unteren gebogenen Glasscheibe mit der Folie aus flexiblem Zwischenschichtmaterial, um die flexible Folie aus Zwischenschichtmaterial mit der unteren gebogenen Glasscheibe zu einem Zwischenlaminat zu verbinden.

15. Verfahren nach Anspruch 14, gekennzeichnet durch Entfernen der Form aus dem Zwischenraum zwischen der oberen Glasscheibe und dem Zwischenlaminat und in Eingriff bringen der oberen gebogenen Glasscheibe mit der Folie aus flexiblem Zwischenschichtmaterial, um letztere mit der oberen gebogenen Glasscheibe zu verbinden und das Zwischenlaminat in einen Mehrschichtenverbund umzuwandeln.

16. Verfahren nach Anspruch 4, gekennzeichnet durch Abstützen des Paares gebogener Glasscheiben auf einem Träger, der an jeder der einander gegenüberliegenden Kantenflächen an den Längsenden der gebogenen Glasscheiben an quer zueinander einen Abstand aufweisenden Stellen angreift, um die Glasscheiben in Längsrichtung in einer Zusammenführstation fluchtend auszurichten und der an jeder der einander gegenüberliegenden Seitenkanten an längs zueinander einen Abstand aufweisenden Stellen angreift, um die Glasscheiben in Querrichtung in der Zusammenführstation fluchtend auszurichten, Aufheben des Eingriffs mit den Teilen an den Längsenden, gleichzeitiges Abheben der gebogenen Glasscheiben von dem Träger, während der Eingriff mit den einander gegenüberliegenden Teilen der Seitenkanten aufrechterhalten wird, in Eingriff bringen der oberen Oberfläche der oberen gebogenen Glasscheibe des Paares, Aufheben des Eingriffs der Teile der Seitenkanten, Trennen des Paares der gebogenen Glasscheiben voneinander in einer solchen Richtung, daß ein Zwischenraum zwischen den in Eingriff stehenden Glasscheiben in der Zusammenführstation gebildet wird, Einbringen einer Folie aus flexiblem Zwischenschichtmaterial (14) in den Zwischenraum in eine über der unteren gebogenen Glasscheibe (12) fluchtend ausgerichtete Stellung, in Eingriff bringen der Folie aus flexiblem Zwischenschichtmaterial mit der oberen Oberfläche der unteren gebogenen Glasscheibe, während die Folie aus flexiblem Zwischenschichtmaterial in einer Form gehalten wird, die mit der Form der gebogenen unteren Glasscheibe fluchtend übereinstimmt, Aufheben des Eingriffs des Trägers der Folie aus flexiblem Zwischenschichtmaterial, um ein Zwischenlaminat (12, 14) aus der unteren gebogenen Glasscheibe und der Folie aus flexiblem Zwischenschichtmaterial auszubilden und Bewegen der oberen gebogenen Glasscheibe (11) in fluchtende Ausrichtung mit dem Zwischenlaminat (12, 14), um die Bodenfläche der oberen Glasscheibe mit der oberen Oberfläche der Folie aus flexiblem Zwischenschichtmaterial (14) in Eingriff zu bringen und Umwandeln des Zwischenlaminats (12, 14) in einen Mehrschichtenverbund (11, 14, 12) aus dem Paar gebogener Glasscheiben und der Folie aus flexiblem Zwischenschichtmaterial.

17. Verfahren nach Anspruch 16, gekennzeichnet durch Aufrechterhalten der fluchtenden Ausrichtung der oberen und unteren gebogenen Glasscheiben (11, 12) während ihrer Trennung.

18. Vorrichtung zum Zusammenführen von gebogenen Glasscheiben (11) und Folien (14) aus flexiblem Zwischenschichtmaterial mit (a) einer Ausgangsstation (32) zum Entfernen der gebogenen Glasscheibe (11) in heißem Zustand aus der Biege-Kühlbahn (30), (b) einer Zusammenführstation (42), dadurch gekennzeichnet, daß zum Überführen einer gebogenen Glasscheibe (11) eine kurze Förderanlage (40) zwischen der Ausgangsstation (32) und der Zusammenführstation (42) vorhanden ist, in der Zusammenführstation (42) Walzen (80, 89, 115) vorhanden sind, die sich in Eingriff mit der gebogenen Glasscheibe (11) bewegen können, um die gebogene Glasscheibe in der Zusammenführstation (42) zu orientieren und in Laminierstellung auszurichten, ein erster Satz von Saugnäpfen (62, 63) auf einer Zeite der Laminierstellung beweglich zur Laminierstellung angeordnet ist und mit der gebogenen Glasscheibe (11) in Eingriff bringbar ist, eine bewegliche und schwenkbare Vakuumform (131) mit einer gekrümmten Wand (133), deren Form mit der Form der gebogenen Glasscheibe (11) übereinstimmt vorhanden ist, für Bewegung zwischen einer Ladestation (43) und der Zusammenführstation (42), diese Vakuumform (131) ist in der Ladestation (43) in eine solche Stellung bringbar, daß die flexible Zwischenschichtfolie (14) auf der gekrümmten Wand (133) aufgenommen werden dann und ist drehbar in eine unterschiedliche Stellung, die mit der Lage der gebogenen Glasscheibe in der Zusammenführstation (42) übereinstimmt, ein hin und her beweglicher Schlitten (120) vorhanden ist, um die Vakuumform (131) aus der Ladestation (43) in die Zusammenführstation (42) zu überführen, die Vakuumform (131) so angeordnet ist, daß sie in der Zusammenführstation (42) in eine Stellung bewegt werden kann, in der die gehaltene flexible Zwischenschichtfolie (44) mit der gebogenen Glasscheibe (11) fluchtend ausgerichtet ist, um die flexible Zwischenschichtfolie (14) auf die Oberfläche der gebogenen Glasscheibe (11) zu überführen kann und daß die Förderanlage (40) mit einer Verlängerung versehen ist, um das Zwischenlaminat (11, 14) aus der Zusammenführstation zu entfernen.

19. Vorrichtung nach Anspruch 18, dadurch gekennzeichnet, daß zum Überführen eines Paares übereinstimmend gebogener Glasscheiben (11, 12) die kurze Forderanlage (40) zwischen der Ausgangsstation (32) und der Zusammenführstation (42) angeordnet ist, die in der Zusammenführstation (42) angeordneten Walzen (80, 89, 115) in Eingriff mit dem Paar gebogener Glasscheiben (11, 12) bewegbar sind, um das Paar gebogener Glasscheiben (11, 12) in der Zusammenführstation (42) zu orientieren und in Laminierstellung auszurichten, ein zweiter Satz von Saugnäpfen (90) auf der dem ersten Satz von Saugnäpfen (62, 63) gegenüberliegenden Seite der Laminierstellung angeordnet ist und mit der zweiten gebogenen Glasscheibe (12) in Eingriff bringbar ist, beide Sätze von Saugnäpfen (62, 63, 90) relativ zur Laminierstellung beweglich angeordnet sind, um die gebogenen Glasscheiben (11, 12) in Laminierstellung voneinander trennen und einen Zwischenraum zwischen ihnen ausbilden zu können, die Vakuumform (131) in eine von der Stellung des Paares der Glasscheiben (11, 12) in der Zusammenführstation (42) abweichende Stellung drehbar ist, der hin und her bewegliche Schlitten (120) die Vakuumform (131) in die Zusammenführstation (42) in eine zwischen den voneinander getrennten gebogenen Glasscheiben im Zwischenraum gelegene Stellung überführt, die Vakuumform (131) so angeordnet ist, daß sie sich in eine Stellung in der Zusammenführstation (42) im Zwischenraum bewegen kann, in der die gehaltene flexible Zwischenschichtfolie (14) mit einer der gebogenen Glasscheiben (11, 12) fluchtend ausgerichtet ist, um die flexible Zwischenschichtfolie (14) auf die Oberfläche einer der beiden Glasscheiben (11, 12) zu übertragen, der zweite Satz von Saugnäpfen (90) in der Zusammenführstation (42) in eine Stellung zum Ablegen der zweiten des Paares der gebogenen Glasscheiben (11, 12) auf der flexiblen Zwischenschichtfolie (14) beweglich ist, um das Zwischenlaminat (11, 14) aus Glasscheibe und flexibler Zwischenschicht in einem Mehrschichtenverbund (11, 14, 12) umzuwandeln, nachdem der Schlitten (120) die Zusammenführstation verlassen hat, die Förderanlage (40) mit einer Verlängerung versehen ist, um den Mehrschichtenverbund (11, 14, 12) aus der Zusammenführstation (42) zu entfernen.

20. Vorrichtung nach Anspruch 18 bis 19, dadurch gekennzeichnet, daß die Vakuumform (131) wahlweise mit einer Vakuumquelle oder einer mit einer Quelle unter Druck stehenden Fluidums verbindbar ist.

21. Vorrichtung nach Ansprüche 18 bis 19, dadurch gekennzeichnet, daß die Forderanlage (40) sich längs eines horizontalen Weges von der Ausgangsstation (32) zur Zusammenführstation (42) erstreckt.

22. Vorrichtung nach Anspruch 19, dadurch gekennzeichnet, daß die Förderanlage (40) zum Transport der unteren Glasscheibe (11) und einer oberen gebogenen Glasscheibe (12), die auf der unteren Glasscheibe (11) liegt, ausgebildet ist und der Zwischenraum sich in einem sich innerhalb der Zusammenführstation (42) senkrecht erstreckenden Raum befindet, der die Föderanlage (40) kreuzt.

23. Vorrichtung nach Anspruch 19, dadurch gekennzeichnet, daß der erste Satz von Saugnäpfen (62, 63) zum Eingriff mit einer konvexen Oberfläche einer der beiden gebogenen Glasscheiben (11) bringbar ist, der zweite Satz von Saugnäpfen (90) zum Eingriff mit einer konkaven Oberfläche der anderen der gebogenen Glasscheiben (12) bringbar ist, die Sätze von Saugnäpfen (62, 63, 90) zum Zentrieren des Paares der gebogenen Glasscheiben (11, 12) ausgebildet sind, wenn die letzteren sich in Laminierstellung befinden, der zweite Satz von Saugnäpfen so ausgbildet und angeordnet ist, daß er nur auf einer Seite der Förderanlage (40) quer zu der Förderanlage bewegt werden kann, der erste Satz von Saugnäpfen so ausgebildet und angeordnet ist, daß er quer zur Förderanlage (40) von einer Seite auf die andere Seite der Förderanlage bewegt werden kann, daß die Sätze Saugnäpfe (62, 63, 90) auf gekrümmten Oberflächen, deren Form im allgemeinen mit der Form der gebogenen Glasscheiben (11, 12) übereinstimmt, befestigt sind, eine Feder (66) mindestens einen Saugnapf im Zentralteil des ersten Satzes (62, 63) vorspannt, um Bewegung quer zur von dem ersten Satz eingenommenen Oberfläche zu begrenzen, so daß die eine der Glasscheiben (11) in ihrem, dem Saugnapf zugewandten Zentralteil vorgespannt wird, wenn sich die Form mit der flexiblen Folie aus Zwischenschichtmaterial auf eine der Glasscheiben zubewegt und während die vorherbestimmte fluchtende Ausrichtung beibehalten wird, so daß die flexible Folie (14) aus Zwischenschichtmaterial, während sie von der Form (131) in einer konkav nach oben gewölbten Stellung gehalten wird, mit einer der gebogenen Glasscheiben zuerst im Zentralteil und danach mit einer sich vom Zentralteil zu den Kanten der Scheiben (11, 12) vergrössernden Fläche in Eingriff gelangt, um Luft und andere Dämpfe von der Grenzfläche zwischen der Glasscheibe (11) und der flexiblen Folie (14) aus Zwischenschichtmaterial zu verdrängen und um ein Zwischenlaminat (11, 14) aus der flexiblen Folie aus Zwischenschichtmaterial und dieser gebogenen Glasscheibe auszubilden.

24. Vorrichtung nach Anspruch 23, dadurch gekennzeichnet, daß die Förderanlage (40) in Abstand voneinander angeordnete Tragwalzen aufweist, die einen im wesentlichen in einer horizontalen Ebene liegenden Transportweg ausbilden, der zweite Satz von Saugnäpfen (90) über der Förderanlage (40) befestigt ist und der erste Satz von Saugnäpfen (62, 63) zur gleichzeitigen senkrechten Bewegung zwischen zurückgesetzen Stellungen unter der Förderanlage (40) entlang eines senkrechten, Zwiscenräume zwischen mehreren benachbarten Walzen der Förderanlage kreuzenden Weges, ausgebildet ist.

25. Vorrichtung nach Anspruch 24, dadurch gekennzeichnet, daß der zweite Satz (90) zur gleichzeitigen Bewegung fest miteinander verbundene Saugnäpfe (90) aufweist und die angeordnet sind zum Eingriff mit der oberen gebogenen Glasscheibe (12) auf jeder Seite ihres Zentralteils, der erste Satz zur gleichzeitigen Bewegung fest miteinander verbundene Saugnäpfe (62) aufweist und die angeordnet sind zum Eingriff mit der Bodenoberfläche der unteren Glasscheibe auf jeder Seite ihres Zentralteils und mindestens einem zusätzlichen Saugnapf (63), um den ersten Satz nach oben gerichtet vorzuspannen und um vorübergehend den Zentralbereich der unteren Glasscheibe nach oben vorzuspannen.

26. Vorrichtung nach Anspruch 23, dadurch gekennzeichnet, daß die ersten und zweiten Sätze von Saugnäpfen (62, 63, 90) relativ beweglich sind in eng zueinander benachbarten Stellungen, um den Zentralteil der zweiten Glasscheibe (12) mit dem Zentralteil der flexiblen Folie (14) aus dem Zwischenschichtmaterial des Zwischenlaminats (11, 14) in Eingriff zu bringen.

27. Vorrichtung nach Anspruch 24, dadurch gekennzeichnet, daß die Form (131) aus der Zusammenführstation entfernbar ist, während die Sätze von Saugnäpfen (62, 63, 90) getrennt sind und die ersten und zweiten Sätze von Saugnäpfen (62, 63, 90) relativ beweglich sind in benachbarte Stellungen um den Zentralteil der unteren konvexen Oberfläche der oberen gebogenen Glasscheibe (12) mit dem Zentralteil der oberen Oberfläche der flexiblen Folie (14) aus Zwischenschichtmaterial des Zwischenlaminats (11, 14) in Eingriff zu bringen.

28. Vorrichtung nach Anspruch 18, zusätzlich dadurch gekennzeichnet, daß die Vakuumform (131) eine erste Wand (133) aufweist, die eine mit der nach oben gerichteten Form der gebogenen Glasscheiben (11, 12) übereinstimmende Krümmung aufweist, eine zweite Wand (135) gleicher Krümmung aufweist, mit einer Öffnung zum Anschluß an eine Vakuumquelle, eine Vielzahl von Abstandhaltern (137) gleicher Dicke vorhanden ist, die über die Wände verteilt angeordnet sind, und die Wände voneinander trennen, daß die Vakuumform einen Außenrand (136) von fester gekrümmter, rahmenartiger Form, der den Zwischenraum zwischen den gekrümmten Wänden umschließt, aufweist und die erste Wand eine Vielzahl von über die Fläche verteilten Öffnungen (134) aufweist.

29. Vorrichtung nach Anspruch 28, dadurch gekennzeichnet, daß die Öffnung in der zweiten Wand wahlweise mit einer Vakuumquelle oder einer Quelle unter Druck stehenden Fluidums verbindbar ist.

30. Vorrichtung nach Anspruch 28, dadurch gekennzeichnet, daß die zweite Wand (135) von einer Vielzahl von Öffnungen durchlöchert ist, von denen mindestens eine wahlweise mit der Vakuumquelle verbindbar ist und mindestens eine andere wahlweise mit der Quelle unter Druck stehenden Fluidums verbindbar ist.

31. Vorrichtung nach Anspruch 28, dadurch gekennzeichnet, daß die Form schwenkbar relativ zum Schlitten am Schlitten (120) angelenkt ist, zum Bewegen zwischen einer ersten Stellung, in der die erste Wand eine konvex nach oben gerichtete Stellung einnimmt und einer zweiten Stellung, in der die erste Wand eine konkav nach unten gerichtete Stellung einnimmt.

32. Vorrichtung nach Ansprüchen 28 bis 31, dadurch gekennzeichnet, daß die gekrümmten Wande (133, 135) der Form aus einer dünnen Metallfolie sind und die Abstandhalter (137) aus einem flexiblen Material sind.

33. Vorrichtung nach Anspruch 32, dadurch gekennzeichnet, daß das flexible Material ein Kautschuk mit einer Shore A Durometerhärte von etwa 40 bis etwa 55 ist.

34. Vorrichtung nach Anspruch 24, dadurch gekennzeichnet, daß die Walzen (80, 89, 115) zum fluchtenden Ausrichten des Paares der Glasscheiben (11, 12) ein Paar von linear drehenden Walzen (115) enthalten, die an jedem Längsende angeordnet sind, jeweils befestigt für eine freie Drehung um eine sich schräg erstreckende Achse, wobei der schräge Winkel der sich geneigt erstreckenden Achsen etwa mit der Hauptrichtung der Endkantenflächen der gebogenen Glasscheibe übereinstimmt, ein Drehzapfen (110) für jedes Paar der linear drehenden Walzen (115) vorhanden ist, daß das Paar von linear drehenden Walzen lagerbar ist für eine gleichzeitige schwenkbare Einstellung relativ zu seinem verbundenen Drehzapfen, um die linear drehenden Walzen jeden Paares in fest fixierte fluchtende Ausrichtung mit den sich quer erstreckenden Teilen einer oder der anderen korrespondierenden, sich längs erstreckenden Endkanten des Paares der gebogenen Glasscheiben (11, 12) zu bringen, daß die sich linear drehenden Wälzen in Stellungen lagerbar sind, die die höhere Erhebung schneiden und ausreichende senkrechte Ausdehnung haben, um die quer verlaufenden Teile der sich längs erstreckenden Endkanten der gebogenen Glasscheiben (11, 12) abzufangen, daß die Paare der sich linear drehenden Wälzen in entgegengesetzten Längsrichtungen beweglich sind zwischen Stellungen mit relativ großem Längsabstand zueinander an den höheren Erhebungen durch Abstände, die größer sind als die Abstände zwischen korrespondierenden, sich längs erstreckenden Endkantenteilen der gebogenen Glasscheiben (11, 12).

35. Vorrichtung nach Anspruch 34, dadurch gekennzeichnet, daß das Paar von Walzen (80, 89) zum fluchtenden Ausrichten der Seitenkante längs jeder Seite der Zusammenführstation befestigt ist, daß mindestens eine der Walzen dieses Paares zum Ausrichten der Seitenkante in Querrichtung beweglich ist zwischen Stellungen, deren Querabstand voneinander größer ist als die Breite der gebogenen Glasscheiben (11, 12) und Stellungen in Eingriff mit Seitenkantenteilen des Glases, wobei die Walzen (80, 89) zum Ausrichten der Seitenkante jedes Paares von den entsprechenden Walzen (89, 90) zum Ausrichten der Seitenkante des anderen Paares einen Querabstand aufweisen, der annähernd gleich ist mit dem Querabstand der Seitenkanteile, die in Eingriff stehen mit korrespondierenden Walzen zum Eingriff mit der Seitenkante dieses Paares.

36. Vorrichtung nach Anspruch 35, dadurch gekennzeichnet, daß die andere Walze dieser Paare von Walzen (89, 90) zum Einstellen der Seitenkante in Querrichtung beweglich ist, entgegengesetzt zur Bewegungsrichtung der anderen Walze des Paares (80, 89) zum Ausrichten der Seitenkante.

37. Vorrichtung nach Anspruch 35 oder 36, dadurch gekennzeichnet, daß eine senkrechte Welle (78, 87) für jede der Walzen (80, 89) zum Einstellen der Seitenkante vorhanden ist, wobei jede der Walzen (80, 89) zum Einstellen der Seitenkante auf einer anderen der Wellen (78, 87) senkrecht nach oben und unten verschiebbar befestigt ist, in Abhängigkeit von der Aufwärtsbewegung der gebogenen Glasscheiben (11, 12) und Anschlägen für die Walzen (80, 89) zum Ausrichten der Seitenkante in Stellungen, die durch senkrechtes Abwärtsbewegen in Übereinstimmung mit dem horizontalen Träger erhalten werden.

38. Vorrichtung nach Anspruch 37, dadurch gekennzeichnet, daß der horizontale Träger die Förderanlage (40) mit den in Längsrichtung einen Abstand aufweisenden Tragwalzen enthält, daß der erste Satz von Saugnäpfen (62, 63) senkrecht beweglich ist zwischen bestimmten Benachbarten der Tragwalzen zum Anheben der Bodenoberfläche der unteren gebogenen Glasscheibe (11) von den Tragwalzen und daß die Walzen (80, 89) zum Ausrichten der Seitenkante entlang der senkrechten Stellungen in Übereinstimmung mit den gebogenen Glasscheiben beweglich sind.

39. Vorrichtung nach Anspruch 38, dadurch gekennzeichnet, daß der erste Satz von Saugnäpfen zum Eingriff mit der Bodenoberfläche der unteren gebogenen Glasscheibe des Paares bringbar ist, der zweite Satz von Saugnäpfen zum Eingriff mit der oberen Oberfläche der oberen gebogenen Glasscheibe des Paares bringbar ist, daß die Sätze von Saugnäpfen mit einer Vakuumquelle verbindbar sind, um an die ersten und zweiten Sätze von Saugnäpfen Vakuum anzulegen.

40. Vorrichtung nach Anspruch 39, dadurch gekennzeichnet, daß mindestens einer dieser Sätze von Saugnäpfen (62, 63, 90) als eine Einheit relativ zu dem anderen der Sätze von Saugnäpfen (62, 63, 90) beweglich ist.

41. Vorrichtung nach Anspruch 40, dadurch gekennzeichnet, daß die Vakuumform (131) mit der gekrümmten Wand (133), deren Form mit der Form der gebogenen Glasscheiben (11, 12) übereinstimmt, mit einer Vakuumquelle verbindbar ist, so daß die gekrümmte Wand eine an ihr anliegende Folie (14) aus flexiblem Zwischenschichtmaterial halten kann und die Vakuumform in eine mit der unteren der gebogenen Glasscheiben (11) fluchtend übereinstimmende Stellung beweglich ist.

42. Vorrichtung nach Anspruch 41, zusätzlich dadurch gekennzeichnet, daß die Vakuumform (131) vom Zwischenlaminat (11, 14) entfernbar ist und die Sätze von Saugnäpfen (62, 62, 90) enger aufeinander zu beweglich sind, um die obere Glasscheibe (12) in Eingriff mit der Folie (14) aus flexiblem Zwischenschichtmaterial des Zwischenlaminats zu bringen.

43. Verwendung der Vorrichtung nach jedem der Ansprüche 18 bis 42 zum Zusammenfügen gebogener Glasscheiben mit flexiblen Folien aus Zwischenschichtmaterial zum Ausbilden von gebogenen laminierten Fenstern.

**Revendications**

1. Procédé d'assemblage de feuilles de verre cintré de formes voulues et de feuilles de matière flexible intercalaire (14) en vue de leur stratification en une glace feuilletée transparente cintrée, consistant à supporter les feuilles de verre cintré dans un poste d'assemblage, à appliquer une feuille de matière flexible d'intercalation (14) contre une paroi dont la forme correspond à celle des feuilles de verre cintré, à déplacer la feuille de matière flexible d'intercalation (14) pour la mettre en position alignée avec une surface d'une feuille de verre cintré (11), à mettre en contact les feuilles ainsi alignées et à retirer les feuilles alignées du poste d'assemblage, caractérisé en ce que la feuille de matière flexible d'intercalation (14) est mise en contact avec la feuille de verre cintré (11) avant l'achèvement d'une période de temps suffisante pour que la feuille de verre cintré refroidisse, à partir de la température à laquelle les feuilles de verre sont cintrées, jusqu'à une température inférieure à celle à laquelle la feuille de matière flexible d'intercalation est suffisamment collante pour résister au glissement par rapport aux feuilles de verre cintré lorsqu'elle est mise en contact avec celles-ci.

2. Procédé selon la revendication 1, caractérisé en ce que la feuille de matière flexible d'intercalation est mise en contact avec une seconde feuille de verre cintré (12) de forme correspondante après qu'une paire de feuilles de verre cintré ont été placées en position alignée dans le poste d'assemblage et que la feuille de matière flexible d'intercalation a été appliquée contre une paroi dont la forme correspond à celle des feuilles de verre cintré, de manière à épouser cette forme correspondante.

3. Procédé selon la revendication 1 ou 2, caractérisé en ce que la feuille ou les feuilles de verre entre(nt) en contact avec la feuille de matière flexible d'intercalation à une température qui n'est pas inférieure à 93°C (200°F).

4. Procédé selon la revendication 2, caractérisé en ce que les feuilles de verre cintré, en provenance d'une zone de cintrage, sont supportées dans un espace s'étendant verticalement à l'intérieur du poste d'assemblage, sous forme d'un empilement comprenant une feuille de verre cintré supérieure (11) et une feuille de verre cintré inférieure (12) et orienté en une disposition sensiblement horizontale, la feuille supérieure est séparée de la feuille inférieur par une translation verticale dans ledit espace s'étendant verticalement tandis que l'alignement vertical des feuilles de verre cintré est maintenu, la feuille de matière flexible d'intercalation (14) est appliquée sur la surface supérieure de la feuille de verre cintré inférieure pour former un sous-ensemble et la feuille de verre supérieure est mise en contact avec la surface supérieure de la feuille de matière flexible d'intercalation pour transformer ce sous-ensemble en un sandwich, avant l'achèvement de ladite période de temps.

5. Procédé selon la revendication 1 ou 2, caractérisé en ce que la feuille de matière flexible d'intercalation est placée et maintenue sous l'action du vide sur un moule à vide (131), puis cette feuille de matière flexible d'intercalation est libérée de l'action du vide lorsque ce moule est dans l'alignement de la feuille de verre cintré inférieure.

6. Procédé selon la revendication 5, caractérisé en ce que le moule à vide est mis sous pression d'air après la suppression du vide.

7. Procédé selon la revendication 1 ou 2, caractérisé en ce que le temps écoulé pour le transport des feuilles de verre cintré à partir de la zone de cintrage et pour l'assemblage du sandwich ne dépasse pas 35 secondes.

8. Procédé selon l'une quelconque des revendications 1 à 7, caractérisé en ce que ladite feuille de verre cintré est supporttée, en des points espacés le long de sa surface courbe, sur des organes de support flexibles (62, 63) disposés le long d'une surface courbe dont la forme épouse généralement ladite forme voulue et mobiles à l'unisson vers et à partir de la surface courbe de la feuille de verre cintré, en ce que l'un au moins des organes de support flexible est aligné de manière à faire face à la partie centrale d'une grande surface de la feuille de verre cintré opposée à la surface concave, en ce que cet organe de support flexible au moins est décalé en direction de ladite partie centrale, de manière à déformer temporairement la partie centrale de la feuille de verre cintré en direction de la surface de support, en ce que les feuilles sont réunies de telle manière que la partie centrale de la feuille flexible supportée entre tout d'abord en contact avec la feuille de verre cintré et que la zone de contact augmente progressivement depuis la partie centrale vers le bord des feuilles pour chasser l'air et les autres vapeurs de la surface interfaciale entre la feuille de verre cintré et la feuille flexible de matière d'intercalation au fur et à mesure que la zone de contact entre cette feuille flexible et cette feuille de verre cintré augmente vers l'extérieur en direction du bord de ces feuilles, ce qui réduit la déformation de la partie centrale, pour former un sous-ensemble de la feuille flexible de matière d'intercalation et de la feuille de verre cintré, et en ce que la surface de support est séparée de la feuille flexible de matière d'intercalation lorsque le sous-ensemble est formé.

9. Procédé selon la revendication 8, caractérisé en ce qu'il est utilisé une première feuille de verre cintré de forme correspondante à la forme voulue pour son assemblage avec la feuille flexible de matière d'intercalation, en ce que la déformation produite dans la feuille de verre cintré est poursuivie, lorsque la surface de support est enlevée, afin de déformer le sous-ensemble dans sa partie centrale, et en ce qu'une grande surface de l'autre des deux feuilles de verre cintré, qui présente une courbure convexe, est appliquée contre la partie centrale de la feuille flexible de matière d'intercalation du sous-ensemble, de manière à mettre en contact la feuille flexible de matière d'intercalation, dans sa partie centrale, avec l'autre feuille de verre cintré de la paire et à augmenter progressivement la surface de contact de cette autre feuille de verre cintré de la paire avec la feuille flexible de matière d'intercalation, à partir de la partie centrale vers le bord pour chasser l'air et les autres vapeurs de l'interface entre l'autre feuille de verre et la feuille flexible de matière d'intercalation, pour transformer le sous-ensemble en un sandwich.

10. Procédé selon la revendication 9, caractérisé en ce que les feuilles de verre cintré sont séparées avec maintien de leur alignement pour former un intervalle entre elles, en ce que la feuille de matière flexible d'intercalation est placée en position alignée entre les feuilles de verre cintré, tandis qu'elle est supportée contre une surface de support dont le forme correspond à la forme voulue, de manière à mettre une surface de la feuille flexible dans l'alignement d'une surface concave de l'une des feuilles de verre cintré faisant face à l'intervalle, en ce que la feuille flexible de matière d'intercalation est mise en contact aligné avec cette surface concave, en ce que la surface de support est retirée et en ce que l'intervalle est fermé de manière à mettre une surface convexe de l'autre des feuilles de verre cintré en contact avec la surface opposée de la feuille flexible de matière d'intercalation, avant que cette feuille de verre cintré ne refroidisse de la température à laquelle les feuilles de verre sont cintrées à une température inférieure à celle à laquelle la feuille de matière flexible d'intercalation presente une adhésivité suffisante pour résister à un glissement par rapport aux feuilles de verre cintré lorsqu'elle est mise en contact avec celles-ci.

11. Procédé selon la revendication 10, caractérisé en ce que les feuilles de verre cintré sont supportées dans un plan généralement horizontal et sont orientées de telle sorte que leur concavité soit dirigée vers le haut, en ce qu'une aspiration est créée pour maintenir la feuille flexible de matière d'intercalation contre la surface de support profilée, et en ce que la surface de support profilée est orientée de telle sorte que sa concavité soit dirigée vers le haut avant l'application de la feuille flexible de matière d'intercalation contre la feuille de verre cintré partiellement déformée.

12. Procédé selon la revendication 11, caractérisé en ce qu'un vide est créé dans les organes de support flexibles pour maintenir l'une des feuilles de verre cintré contre un premier jeu de ces organes de support flexibles et pour maintenir l'autre des feuilles de verre cintré contre un second jeu de ces organes de support flexibles.

13. Procédé selon l'une quelconque des revendications 1 à 12, caractérisé en ce qu'en préparation de l'assemblage de la feuille de matière flexible d'intercalation contre une feuille de verre cintré qui est orientée de telle sorte que sa concavité soit dirigée vers le haut et qu'elle supporte cette feuille de matière flexible d'intercalation, cette dernière est placée sur ledit moule qui présente une première paroi dont la forme correspond à ladite forme voulue, tandis que ce moule est orienté de telle sorte que cette première paroi ait sa convexité dirigée vers le haut, en ce qu'un vide est créé à travers cette première paroi pour que la feuille de matière flexible d'intercalation soit supportée contre elle, en ce que l'orientation du moule est modifiée pour donner à la première paroi une orientation dans laquelle sa concavité est dirigée vers le haut, tout en maintenant le vide à travers cette première paroi pour maintenir la feuille de matière flexible d'intercalation contre elle avec une forme qui correspond à ladite forme voulue, et en ce que le moule est placé en position alignée avec la feuille de verre cintré tandis qu'il supporte la feuille de matière flexible d'intercalation contre lui, en préparation du transfert de la feuille flexible entre ladite première paroi du moule et ladite feuille de verre.

14. Procédé selon la revendication 13, caractérisé en ce que les deux feuilles de verre cintré alignés sont supportées en position emboîtée l'une dans l'autre, leur concavité étant dirigée vers le haut, la paire de feuilles comprenant ainsi une feuille de verre cintré supérieure et une feuille de verre cintré inférieure, et en ce qu'il comprend en outre l'opération consistant à séparer les feuilles de verre cintré l'une de l'autre, pour former un intervalle entre ces feuilles de verre cintré, avant que le moule ne soit mis en position alignée avec la feuille de verre cintré inférieure tandis qu'il supporte la feuille flexible de matière d'intercalation contre lui, et à mettre la feuille de verre cintré inférieure en contact avec la feuille de matière flexible d'intercalation pour coller cette feuille flexible de matière intercalaire contre la feuille de verre cintré inférieure et former ainsi un sous-ensemble.

15. Procédé selon la revendication 14, caractérisé en ce que le moule est retiré d'un intervalle entre la feuille de verre supérieure et le sous-ensemble et en ce que la feuille de verre cintré supérieure est mise en contact avec la feuille de matière flexible d'intercalation afin de coller cette dernière contre la feuille de verre cintré supérieure et de convertir le sous-ensemble en un sandwich.

16. Procédé selon la revendication 4, caractérisé en ce que la paire de feuilles de verre cintré est placée sur un support, en ce que chacune des surfaces des bords des extrémités longitudinales opposées des feuilles de verre cintré est saisie en des points espacés transversalement afin d'aligner les feuilles de verre en direction longitudinale d'un poste d'assemblage, en ce que chacun des bords latéraux opposés des feuilles est saisi en des points espacés longitudinalement afin d'aligner les feuilles de verre dans la direction transversale du poste d'assemblage, en ce que les parties des bords des extrémités longitudinales sont libérées, en ce que les feuilles de verre cintré sont soulevées à l'unisson dudit support tandis que le contact est maintenu avec les parties des bords latéraux opposés, en ce que la surface supérieure de la feuille de verre cintré supérieure de ladite paire est saisie, en ce que les parties des bords latéraux sont libérées, en ce que les deux feuilles de verre cintré sont séparées dans une direction telle qu'il soit formé un intervalle entre les feuilles de verre saisies dans le poste d'assemblage, en ce qu'une feuille de matière flexible d'intercalation (14) est insérée dans cet intervalle dans une position d'alignement au-dessus de la feuille de verre cintré inférieure (12), en ce que la feuille de matière flexible d'intercalation est appliquée contre la surface supérieure de la feuille de verre cintré inférieure tandis que cette feuille de matière flexible d'intercalation est supportée avec une forme qui correspond à la forme des feuilles de verre cintré, dans l'alignement de la feuille de verre cintré inférieure, en ce que le support de la feuille de matière flexible d'intercalation est libéré pour former un sous-ensemble (12, 14) de la feuille de verre cintré inférieure et de la feuille de matière flexible d'intercalation, et en ce que la feuille de verre cintré supérieure (11) est placée en position alignée avec le sous-ensemble (12, 14) pour que la surface inférieure de cette feuille de verre supérieure soit appliquée contre la surface supérieure de la feuille de matière flexible d'intercalation (14) afin de convertir le sous-ensemble (14, 12) en un sandwich (11, 14, 12) formé de la paire de feuilles de verre cintré et de la feuille de matière flexible d'intercalation.

17. Procédé selon la revendication 16, caractérisé en ce que les feuilles de verre cintré supérieure et inférieure (11, 12) sont maintenues dans l'alignement l'une de l'autre pendant leur séparation.

18. Dispositif pour l'assemblage de feuilles de verre cintré (11) et de feuilles (14) de matière flexible d'intercalation, comprenant (a) un poste de sortie (32) pour extraire les feuilles de verre cintré (11), alors qu'elles sont chaudes, d'un four-tunnel (30) de cintrage des feuilles de verre et (b) un poste d'assemblage (42), caractérisé en ce qu'un transporteur de coutre longueur (40) est disposé entre le poste de sortie (32) et le poste d'assemblage (42) pour le transfert d'une feuille de verre cintré (11), en ce que des galets (80, 89, 115) sont prévus dans le poste d'assemblage (42) pour se mettre en prise avec la feuille de verre cintré (11), afin d'orienter et d'aligner la feuille de verre cintré (11) en un lieu d'assemblage au niveau du poste d'assemblage (42), en ce qu'un premier jeu de ventouses (62, 63) est disposé d'un côté dudit lieu d'assemblage, de manière à pouvoir se déplacer par rapport à ce lieu d'assemblage et entrer en contact avec la feuille de verre cintré (11), en ce qu'un moule à vide (131) comportant une paroi perforée (133) sont la forme épouse celle de la feuille de verre cintré (11) est mobile et monté pivotant de manière à se déplacer entre un poste de chargement (43) et le poste d'assemblage, en ce que ce moule à vide (131) peut être supporté, dans le poste de chargement (43), dans une orientation qui se prête au chargement de la feuille intercalaire flexible (14) contre la paroi perforée (133), et peut pivoter dans une orientation différente correspondant à la forme de la feuille de verre cintré dans le poste d'assemblage (42), en ce qu'un chariot (120) mobile en un mouvement de va-et-vient est prévu pour transférer le moule à vide (131) depuis le poste de chargement (43) vers le poste d'assemblage (42), en ce que le moule à vide (131) est agencé de manière à pouvoir se placer, dans le poste d'assemblage (42), dans une position dans laquelle la couche intercalaire flexible (14) chargée est alignée avec la feuille de verre cintré (11) en vue du transfert de cette feuille intercalaire flexible (14) sur une surface de la feuille de verre cintré (11), en ce que le chariot mobile (120) peut être ramené dans le poste de chargement (43), et en ce que le transporteur (40) comporte un prolongement pour l'évacuation du sous-ensemble (11, 14) hors du poste d'assemblage (42).

19. Dispositif selon la revendication 18, caractérisé en ce que le transporteur de courte longueur (40) est disposé entre le coste de sortie (32) et le poste d'assemblage (42) pour transférer une paire de feuilles de verre cintré (11, 12) de formes correspondantes, en ce que les galets (80, 89, 115) sont disposés, dans le poste d'assemblage (42), de manière à se mettre en prise avec la paire de feuilles de verre cintré (11, 12) pour orienter et aligner cette paire de feuilles de verre cintré (11, 12) dans une position d'assemblage dans le poste d'assemblage (42), en ce qu'un second jeu de ventouses (90) est prévu du côté de la position d'assemblage opposé au premier jeu de ventouses (62, 63) et peut être mis en prise avec la seconde feuille de verre (12), en ce que les deux jeux de ventouses (62, 63, 90) sont agencés de manière à être mobiles par rapport à la position d'assemblage afin de séparer les feuilles de verre cintré (11, 12) dans la position d'assemblage pour former un intervalle entre elles, en ce que le moule à vide (131) peut être mis par rotation dans une orientation différente, correspondant à la forme de la paire de feuilles de verre (11, 12) dans le poste d'assemblage (43), en ce que le chariot mobile en un mouvement de va-et-vient (120) transfère le moule à vide (131) dans le poste d'assemblage (42), dans une position dans l'intervalle entre les feuilles de verre (11, 12) séparées, en ce que le moule à vide (131) est agencé de manière à se placer, au niveau du poste d'assemblage (42), dans une position dans l'intervalle, dans laquelle la feuille intercalaire flexible (14) chargée est alignée avec l'une des feuilles de verre cintré (11, 12), pour transférer la feuille intercalaire flexible (14) sur une surface de l'une des feuilles de verre (11, 12), le second jeu de ventouses (90) pouvant être placé, à l'intérieur du poste d'assemblage (42), dans une position pour déposer la seconde des deux feuilles de verre cintré (11, 12) sur la feuille intercalaire flexible (14), pour convertir le sous-ensemble (11, 14) d'une feuille de verre et d'une couche intercalaire flexible en un sandwich (11, 14, 12) après que le chariot (120) a quitté le poste d'assemblage (42), et en ce que le transporteur (40) comporte un prolongement pour l'évacuation du sandwich (11, 14, 12) hors du poste d'assemblage (42).

20. Dispositif selon la revendication 18 ou 19, caractérisé en ce que le moule à vide (131) est susceptible d'être raccordé sélectivement à une source de vide ou à une source de fluide sous pression.

21. Dispositif selon la revendication 18 ou 19, caractérisé en ce que le transporteur (40) suit un trajet horizontal entre le poste de sortie (32) et le poste d'assemblage (42).

22. Dispositif selon la revendication 19, caractérisé en ce que le transporteur (40) est prévu pour supporter la feuille de verre inférieure (11) et une feuille de verre cintré supérieure (12) supportée sur la feuille de verre inférieure (11) et en ce que ledit intervalle est situé, au niveau du poste d'assemblage (42), dans les limites d'un espace s'étendant verticalement qui coupe le transporteur (40).

23. Dispositif selon la revendication 19, caractérisé en ce que le premier jeu de ventouses (62, 63) est ajustable de manière à saisir une surface convexe de l'une des feuilles de verre cintré (11), en ce que le second jeu de ventouses (90) est ajustable de manière à saisir une surface concave de l'autre des feuilles de verre cintré (12), ces jeux de ventouses (62, 63, 90) sont ajustés de manière à faire face à la paire de feuilles de verre cintré (11, 12) lorsque cette dernière est dans la position d'assemblage, le second jeu de ventouses étant réalisé et disposé de manière à effectuer un mouvement perpendiculaire au transporteur (40) d'un seul côté du transporteur, le premier jeu de ventouses étant réalisé et disposé de manière à effectuer un mouvement perpendiculaire au transporteur d'un côté à l'autre du transporteur, les jeux de ventouses (62, 63, 90) étant montés le long de surfaces courbes dont la forme épouse généralement celle des feuilles de verre cintré (11, 12), un ressort (66) sollicitant au moins une ventouse dans la partie centrale du premier jeu (62, 63) pour produire un mouvement limité perpendiculaire à la surface courbe occupée par le premier jeu, afin de déformer la première des feuilles de verre (11) dans sa partie centrale située en face de cette ventouse, au moment où le moule est déplacé avec la feuille flexible de matière d'intercalation vers cette première feuille de verre, tout en conservant ledit alignement prédéterminé, d'où il résulte que la feuille flexible (14) de matière d'intercalation entre tout d'abord en contact avec la première feuille de verre, alors qu'elle est supportée par le moule (131) avec sa concavité dirigée vers le haut, au niveau de ladite partie centrale de cette feuille de verre, puis le long d'une zone de dimension croissante à partir de la partie centrale vers le bord des feuilles accolées (11, 14), afin de chasser l'air et les autres vapeurs de l'interface entre le feuille de verre (11) et la feuille flexible (14) de matière d'intercalation, pour former un sous-ensemble (11, 14) de la feuille flexible de matière d'intercalation et de la feuille de verre cintré.

24. Dispositif selon la revendication 23, caractérisé en ce que le transporteur (40) comprend des rouleaux transporteurs espacés, définissant un trajet dans un plan sensiblement horizontal et en ce que le second jeu de ventouses (90) est situé au-dessus du transporteur (40) et le premier jeu de ventouses (62, 63) est monté de manière à pouvoir effectuer un mouvement vertical à l'unisson entre des positions en retrait au-dessous du transporteur (40), le long de trajets verticaux qui coupent les intervalles entre certains rouleaux voisins du transporteur.

25. Dispositif selon la revendication 24, caractérisé en ce que le second jeu se compose de ventouses (90) montées rigidement en vue d'un déplacement à l'unisson et disposées de manière à saisir le surface supérieure de la feuille de verre cintré supérieure (12) de part et d'autre de la partie centrale de celle-ci et en ce que le premier jeu comprend des ventouses (62) montées rigidement et mobiles à l'unisson pour saisir la surface inférieure de la feuille de verre inférieure de part et d'autre de la partie centrale de celle-ci et au moins une ventouse supplémentaire (63) pour ce premier jeu, sollicitée vers le haut pour faire face à la partie centrale de la feuille de verre inférieure et pour solliciter temporairement vers le haut cette partie centrale.

26. Dispositif selon la revendication 23, caractérisé en ce que le premier et le second jeux de ventouses (62, 63, 90) sont susceptibles d'un mouvement relatif vers des positions rapprochées pour mettre la partie centrale de la seconde feuille de verre (12) en contact avec la partie centrale de la feuille flexible (14) de matière d'intercalation du sous-ensemble (11, 14).

27. Dispositif selon la revendication 24, caractérisé en ce que le moule (131) peut être éloigné du poste d'assemblage tandis que les jeux de ventouses (62, 63, 90) sont séparés et en ce que les premier et second jeux de ventouses (62, 63, 90) sont susceptibles d'un mouvement relatif vers des positions rapprochées pour mettre la partie centrale de la surface inférieure convexe de la feuille de verre cintré supérieure (12) en contact avec la partie centrale de la surface supérieure de la feuille flexible (14) de matière d'intercalation du sous-ensemble (11, 14).

28. Dispositif selon la revendication 18, caractérisé en outre en ce que le moule à vide (131) comporte une première paroi (133) ayant une forme courbe qui correspond à la forme en élévation des feuilles de verre cintré (11, 12), une seconde paroi (135) de forme courbe semblable présentant une ouverture utilisable pour le branchement sur une source de vide, une multiplicité d'éléments d'écartement (137) d'épaisseur uniforme, répartis sur toute l'étendue desdites parois et séparant ces parois, une paroi périphérique d'écartement (136) en forme de cadre courbe et rigide entourant l'espace compris entre les parois de forme courbe, la première paroi présentant une multiplicité de perforations (134) réparties sur toute son étendue.

29. Dispositif selon la revendication 28, caractérisé en ce que l'ouverture dans la seconde paroi est adaptable pour être sélectivement raccordée à la source de vide et à une source de fluide sous pression.

30. Dispositif selon la revendication 28, caractérisé en ce que la seconde paroi (135) est percée de plusieurs ouvertures, dont l'une au moins est adaptable pour être sélectivement raccordée à la source de vide et une autre au moins est adaptable pour être sélectivement raccordée à la source de fluide sous pression.

31. Dispositif selon la revendication 28, caractérisé en ce que le chariot (120) supporte le moule de telle manière que celui-ci puisse pivoter par rapport au chariot, en vue d'un mouvement entre une première orientation dans laquelle la première paroi a en élévation une forme convexe dirigée vers le haut et une seconde orientation dans laquelle cette première paroi a en élévation une forme convexe dirigée vers le bas.

32. Dispositif selon l'une quelconque des revendications 28 à 31, caractérisé en ce que les parois courbes (133, 135) du moule sont faites de tôte mince et les éléments d'écartement (137) sont faites d'une matière souple.

33. Dispositif selon la revendication 32, caractérisé en ce que ladite matière souple est un caoutchouc ayant une dureté Shore A d'environ 40 à environ 55.

34. Dispositif selon la revendication 24, caractérisé en ce que les galets (80, 89, 115) destinés à aligner la paire de feuilles de verre cintré (11, 12) comprennent une paire de galets rotatifs linéaires (115) à chaque extrémité longitudinale, montés chacun de manière à tourner librement autour d'un axe dirigé obliquement, l'angle d'obliquité des axes dirigés obliquement correspondant approximativement à l'orientation moyenne des surfaces des bords d'extrémité d'une feuille de verre cintré, un pivot (110) étant prévu pour chaque paire de galets rotatifs linéaires (115), la paire de galets rotatifs linéaires étant montée de façon à être réglable à l'unisson par pivotement par rapport au pivot qui lui est associé pour mettre les galets rotatifs linéaires (115) de chaque paire dans des positions fixes d'alignement avec des parties s'étendant transversalement de l'un ou de l'autre des bords d'extrémité longitudinale correspondants de la paire de feuilles de verre cintré (11, 12), les galets rotatifs linéaires pouvant être supportés dans des positions intersectant ladite élévation plus haute et ayant des dimensions verticales suffisantes pour intercepter des parties transversalement espacées des bords d'extrémité longitudinale des feuilles de verre cintré (11, 12), ces paires de rouleaux rotatifs linéaires étant mobiles en sens longitudinaux opposés vers des positions d'espacement longitudinal relativement plus grand, séparées l'une de l'autre, au niveau de ladite élévation plus haute, par des distances plus grandes que les distances longitudinales entre des parties des bords d'extrémité longitudinale correspondants des feuilles de verre cintré (11, 12).

35. Dispositif selon la revendication 34, caractérisé en ce que la paire de galets (80, 89) d'alignement des bords latéraux est montée le long de chaque côté du poste d'assemblage, l'une au moins de ces paires de galets d'alignement des bords latéraux est mobile en direction transversale entre des positions espacées transversalement, séparées l'une de l'autre par une distance plus grande que la largeur des feuilles de verre cintré (11, 12), et des positions de contact avec des parties des bords latéraux du verre dans lesquelles les galets (80, 89) d'alignement des bords latéraux de chaque paire sont espacés transversalement, par rapport aux galets correspondants (89, 90) d'alignement des bords latéraux de l'autre paire, d'une distance transversale approximativement égale à la distance transversale entre les parties des bords latéraux saisies par les galets correspondants de contact avec les bords latéraux de ces paires.

36. Dispositif selon la revendication 35, caractérisé en ce que l'autre des paires de galets (89, 90) d'alignement des bords latéraux est mobile dans une direction transversale opposée à la direction transversale de mouvement de la première des paires de galets (80, 89) d'alignement des bords latéraux.

37. Dispositif selon la revendication 35 ou 36, caractérisé en ce qu'un arbre vertical (78, 87) est prévu pour chacun des galets (80, 89) d'alignement des bords latéraux, chacun des galets (80, 89) d'alignement des bords latéraux étant monté sur un arbre (78, 87) différent de manière à pouvoir effectuer un mouvement vertical coulissant vers le haut en réponse au déplacement vers le haut des feuilles de verre cintré (11, 12) et un mouvement vertical coulissant vers le bas, des moyens de butée étant prévus pour supporter les galets (80, 89) d'alignement des bords latéraux dans des positions obtenues par ce mouvement vertical coulissant vers le bas, dans l'alignement dudit support horizontal.

38. Dispositif selon la revendication 37, caractérisé en ce que ledit support horizontal comprend le transporteur (40) comportant des rouleaux transporteurs espacés longitudinalement, le premier jeu de ventouses (62, 63) est mobile verticalement entre certains rouleaux voisins du transporteur pour soulever la surface inférieure de la feuille de verre cintré inférieure (11) à partir des rouleaux du transporteur et les galets (80, 89) d'alignement des bords latéraux peuvent monter le long des arbres verticaux à l'unisson avec les feuilles de verre cintré (11, 12).

39. Dispositif selon la revendication 38, caractérisé en ce que le premier jeu de ventouses peut être adapté pour saisir la surface inférieure de la feuille de verre cintré inférieure de la paire, le second jeu de ventouses peut être adapté pour saisir la surface supérieure de la feuille de verre cintré supérieure de la paire et les jeux de ventouses peuvent être mis en communication avec une source de vide pour créer un vide dans les premier et second jeux de ventouses.

40. Dispositif selon la revendication 39, caractérisé en ce que l'un au moins des jeux de ventouses (62, 63, 90) est mobile en bloc par rapport à l'autre des jeux de ventouses (62, 63, 90).

41. Dispositif selon la revendication 40, caractérisé en ce que le moule à vide (131), qui comporte une paroi perforée (133) dont la forme correspond aux formes correspondantes des feuilles de verre cintré (11, 12), est susceptible d'être raccordé à une source de vide, de telle manière que sa paroi perforée soit susceptible de supporter contre elle une feuille (14) de matière flexible d'intercalation, et en ce que le moule à vide peut être placé dans une position d'alignement avec la feuille de verre cintré inférieure (11).

42. Dispositif selon la revendication 41, caractérisé en outre en ce que le moule à vide (131) peut être éloigné du sous-ensemble (11, 14) et en ce que les jeux de ventouses (62, 63, 90) peuvent être rapprochés l'un de l'autre pour mettre la feuille de verre supérieure (12) en contact avec la feuille (14) de matière flexible d'intercalation du sous-ensemble.

43. Utilisation du dispositif selon l'une quelconque des revendications 18 à 42 pour assembler des feuilles de verre cintré avec des feuilles flexibles de matière d'intercalation et former des glaces feuilletées cintrées.

*FIG. I*

FIG. 2

FIG. 3

FIG. 4

FIG. 5

FIG. 6

FIG. 7

FIG. 9

FIG. 8

FIG. 10

FIG. II

FIG. 12

FIG. 13

FIG. 14

FIG. 15

FIG. 16

FIG. 17

0 071 109

FIG. 19

FIG. 18

14

FIG. 21

FIG. 20